(19) Europäisches Patentamt
European Patent Office
Office européen des brevets

(11) EP 1 327 658 A1

(12) # EUROPÄISCHE PATENTANMELDUNG

(43) Veröffentlichungstag:
**16.07.2003 Patentblatt 2003/29**

(51) Int Cl.[7]: **C08K 5/3462**, C08L 57/08, C08L 27/06

(21) Anmeldenummer: **03003579.4**

(22) Anmeldetag: **04.10.1996**

(84) Benannte Vertragsstaaten:
**AT BE DE DK ES FR GB IT NL SE**

(30) Priorität: **13.10.1995 CH 291295**
**07.11.1995 CH 315195**

(62) Dokumentnummer(n) der früheren Anmeldung(en) nach Art. 76 EPÜ:
**00117205.5 / 1 046 668**
**96810664.1 / 0 768 336**

(71) Anmelder: **Crompton Vinyl Additives GmbH**
**68623 Lampertheim (DE)**

(72) Erfinder:
- **Wehner, Wolfgang**
  **64673 Zwingenberg (DE)**
- **Friedrich, Hans-Helmut**
  **64686 Lauertal (DE)**
- **Malzacher, Kornelia**
  **64678 Lindenfels (DE)**
- **Mehner, Hans-Ludwig**
  **68623 Lampertheim (DE)**
- **Drewes, Rolf**
  **67551 Worms (DE)**

(74) Vertreter: **Wibbelmann, Jobst, Dr., Dipl.-Chem.**
**Wuesthoff & Wuesthoff,**
**Patent- und Rechtsanwälte,**
**Schweigerstrasse 2**
**81541 München (DE)**

Bemerkungen:
Diese Anmeldung ist am 17 - 02 - 2003 als Teilanmeldung zu der unter INID-Kode 62 erwähnten Anmeldung eingereicht worden.

(54) **Stabilisatorkombinationen für chlorhaltige Polymere**

(57) Es wird eine Stabilisatorkombination für in der Hauptsache PVC beschrieben, enthaltend

A) mindestens eine Verbindung der Formel I

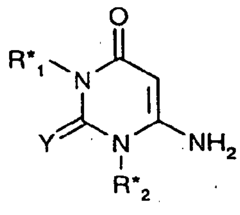

(I)

worin $R^*_1$ und $R^*_2$ unabhängig voneinander für $C_1$-$C_{12}$-Alkyl, $C_3$-$C_6$-Alkenyl, unsubstituiertes oder mit 1 bis 3 $C_1$-$C_4$-Alkyl-, $C_1$-$C_4$-Alkoxy-, $C_5$-$C_8$-Cycloalkyl- oder mit Hydroxygruppen oder Cl-Atomen substituiertes $C_5$-$C_8$-Cycloalkyl, unsubstituiertes oder am Phenylring mit 1 bis 3 $C_1$-$C_4$-Alkyl-, $C_1$-$C_4$-Alkoxy-, $C_5$-$C_8$-Cycloalkyl- oder mit Hydroxygruppen oder Cl-Atomen substituiertes $C_7$-$C_9$-Phenylalkyl darstellen,
und $R^*_1$ oder $R^*_2$ zusätzlich für Wasserstoff und $C_1$-$C_{12}$-Alkyl stehen können, sowie
Y S oder O ist, und

B) mindestens eine Verbindung aus der Gruppe der Organozinnstabilisatoren.

EP 1 327 658 A1

## Beschreibung

Diese Anmeldung ist eine Teilanmeldung zu der am 25. Oktober 2000 veröffentlichten EP 1 046 668 A2 (Anmelde-Nr.: 00117205.5), deren Offenbarung hier durch Bezugnahme vollständig aufgenommen wird.

Die Erfindung betrifft Stabilisatorkombinationen aus einer Verbindung der unten dargestellten Formel I und mindestens einem weiteren Stoff aus den Gruppen der Perchlorat-Verbindungen, Glycidylverbindungen, beta-Diketone, beta-Ketoester, Dihydropyridine, Polydihydropyridine, Polyole, Disaccharidalkohole, sterisch gehinderten Amine (Tetraalkylpiperidinverbindungen), Alkalialumosilikate, Hydrotalcite, Alkalialumocarbonate (Dawsonite), Alkali (Erdalkali) carboxylate,-(hydrogen) carbonate oder -hydroxide, Antioxidantien, Gleitmittel sowie der Organozinnstabilisatoren, die sich zum Stabilisieren von chlorhaltigen Polymeren, besonders PVC, eignen.

PVC kann durch eine Reihe von Zusatzstoffen stabilisiert werden. Verbindungen des Bleis, Bariums und Cadmiums sind dafür besonders gut geeignet, sind jedoch heute aus ökologischen Gründen oder wegen ihres Schwermetallgehalts umstritten. (vgl."Kunstoffadditive", R. Gächter/ H. Müller, Carl Hanser Verlag, 3.Aufl., 1989, Seiten 303-311, und "Kunststoff Handbuch PVC", Band 2/1, W.Becker/D.Braun, Carl Hanser Verlag, 2.Aufl., 1985, Seiten 531-538; sowie Kirk-Othmer: "Encyclopedia of Chemical Technology", $4^{th}$ Ed.,1994, Vol 12, Heat Stabilizers S. 1071-1091. Man sucht daher weiter nach wirksamen Stabilisatoren und Stabilisatorkombinationen, welche frei von Blei, Barium und Cadmium sind.

Verbindungen der Formel I sind bereits in DE-PS-1,694,873, EP 65 934 und EP 41 479 beschrieben worden, und können nach bekannten Methoden in einem oder mehreren Verfahrensschritt(en) hergestellt werden.

Es wurde nun gefunden, daß man A) Verbindungen der Formel I

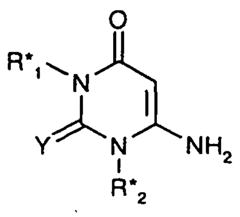

(I)

worin $R^*_1$ und $R^*_2$ unabhängig voneinander für $C_1$-$C_{12}$-Alkyl, $C_3$-$C_6$-Alkenyl, unsubstituiertes oder mit 1 bis 3 $C_1$-$C_4$-Alkyl-, $C_1$-$C_4$-Alkoxy-, $C_5$-$C_8$-Cycloalkyl- oder Hydroxygruppen oder Cl-Atomen substituiertes $C_5$-$C_8$-Cycloalkyl, unsubstituiertes oder am Phenylring mit 1 bis 3 $C_1$-$C_4$-Alkyl-, $C_1$-$C_4$-Alkoxy-$C_5$-$C_8$-Cycloalkyl- oder Hydroxygruppen oder Cl-Atomen substituiertes $C_7$-$C_9$-Phenylalkyl darstellen, und $R^*_1$ und $R^*_2$ zusätzlich für Wasserstoff und $C_1$-$C_{12}$-Alkyl- stehen können, sowie

Y S oder O ist,

mit B) mindestens einer Verbindung aus der Gruppe der

Perchlorat-Verbindungen oder/und

Glycidylverbindungen oder/und

beta-Diketone, beta-Ketoester oder/und

Dihydropyridine, Polydihydropyridine oder/und

Polyole, Disaccharidalkohole oder/und

sterisch gehinderten Amine (Tetraalkylpiperidinverbindungen) oder/und Alkalialumosilikate (Zeolithe) oder/und

Hydrotalcite oder/und

Alkalialumocarbonate (Dawsonite) oder/ und Alkali (Erdalkali) carboxylate,(hydrogen) carbonate oder -hydroxide oder/ und

Antioxidantien, Gleitmittel oder/und der Organozinnstabilisatoren, kombiniert, um damit chlorhaltige Polymere, besonders PVC, zu stabilisieren.

Wobei für Verbindungen der Formel I gilt:

$C_1$-$C_4$-Alkyl bedeutet z.B.: Methyl, Ethyl, n-Propyl, iso-Propyl, n-, i-, sec- oder t-Butyl.

$C_1$-$C_{12}$-Alkyl bedeutet z.B außer den soeben genannten Resten Pentyl, Hexyl, Heptyl, Octyl, 2-Ethylhexyl, i-Octyl, Decyl, Nonyl, Undecyl oder Dodecyl. $C_1$-$C_4$-Alkoxy bedeutet z.B. Methoxy, Ethoxy, Propoxy, Isopropoxy, Butoxy oder Isobutoxy.

$C_5$-$C_8$-Cycloalkyl bedeutet z.B. Cyclopentyl, Cyclohexyl, Cycloheptyl oder Cyclooctyl.

Bei $C_7$-$C_9$-Phenylalkyl handelt es sich beispielsweise um Benzyl, 1- oder 2-Phenylethyl, 3-Phenylpropyl, $\alpha$, $\alpha$-Dimethylbenzyl oder 2-Phenylisopropyl, vorzugsweise um Benzyl.

Wenn die Cycloalkylgruppen oder die Phenylgruppe der Phenylalkylreste substituiert sind, dann bevorzugt mit 2 oder einem Substituenten, und von den Substituenten vor allem mit Cl, Hydroxy, Methyl oder Methoxy.

$C_3$-$C_6$-Alkenyl bedeutet z.B. Vinyl, Allyl, Methallyl, 1-Butenyl oder 1-Hexenyl, vorzugsweise Allyl.

Bevorzugt sind dabei Verbindungen der Formel I, worin
$R^*_1$ und $R^*_2$ unabhängig voneinander für $C_1$-$C_4$-Alkyl und Wasserstoff stehen. Besonders bevorzugt sind entweder $R^*_1$ und $R^*_2$ gleich und bedeuten Methyl, Ethyl, Propyl, Butyl, oder Allyl, oder sie sind verschieden und bedeuten Ethyl und Allyl.

Die Verbindungen der Komponente A) sind zur Erzielung der Stabilisierung im chlorhaltigen Polymer zweckmäßig zu 0,01 bis 10, vorzugsweise zu 0,05 bis 5, insbesondere zu 0,1 bis 3 Gew.% zu verwenden.

Die Verbindungen der unter B) genannten Gruppen werden wie folgt erläutert:

*Perchlorat-Verbindungen*

Beispiele sind diejenigen der Formel $M(ClO_4)_n$, wobei M für Li, Na, K, Mg, Ca, Sr, Zn, Al, La oder Ce steht. Der Index n ist entsprechend der Wertigkeit von M 1, 2 oder 3. Die Perchloratsalze können mit Alkoholen (Polyolen, Cyclodextrinen), oder Ätheralkoholen bzw. Esteralkoholen komplexiert sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglycole, sowie Di-, Tri- und Tetrapentaerythrit oder Polyvinylalkohol in verschiedenen Polymerisationsgraden. Die Perchloratsalze können dabei in verschiedenen gängigen Darreichungsformen eingesetzt werden; z.B als Salz oder wäßrige Lösung aufgezogen auf ein Trägermaterial wie PVC, Ca-Silikat, Zeolithe oder Hydrotalcite, oder eingebunden durch chemische Reaktion in einen Hydrotalcit. Als Polyolpartialether sind Glycerinmonoether und Glycerinmonothioether bevorzugt. Weitere Ausführungsformen werden beschrieben in EP 394.547, EP 457.471 und WO-94/24200.

Die Perchlorate können in einer Menge von beispielsweise 0,001 bis 5, zweckmäßig 0,01 bis 3, besonders bevorzugt 0,01 bis 2 Gew.-Teilen, bezogen auf 100 Gew.-Teile PVC, angewandt werden.

*Glycidylverbindungen*

Sie enthalten die Glycidylgruppe

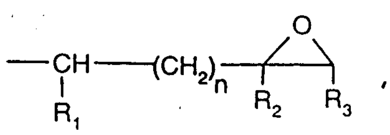

wobei diese direkt an Kohlenstoff, Sauerstoff-, Stickstoff- oder Schwefelatome gebunden ist, und worin entweder $R_1$ und $R_3$ beide Wasserstoff sind, $R_2$ Wasserstoff oder Methyl und n=0 ist, oder worin $R_1$ und $R_3$ zusammen $-CH_2-CH_2-$ oder $-CH_2-CH_2-CH_2$bedeuten, $R_2$ dann Wasserstoff und n=0 oder 1 ist.

I) Glycidyl- und b-Methylglycidylester erhältlich durch Umsetzung einer Verbindung mit mindestens einer Carboxylgruppe im Molekül und Epichlorhydrin bzw. Glycerindichlorhydrin bzw. b-Methyl-epichlorhydrin. Die Umsetzung erfolgt zweckmäßig in Gegenwart von Basen.

Als Verbindungen mit mindestens einer Carboxylgruppe im Molekül können aliphatische Carbonsäuren verwandt werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten Säuren.

Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.

Weiterhin können aromatische Carbonsäuren Verwendung finden, wie beispielsweise Benzoesäure, Phthalsäure, Isophthalsäure, Trimellithsäure oder Pyromellithsäure.

Ebenfalls können auch carboxylterminierte Addukte, z.B. von Trimellithsäure und Polyolen, wie beispielsweise Glycerin oder 2,2-Bis-(4-hydroxycyclohexyl)-propan verwandt werden.

Weitere im Rahmen dieser Erfindung verwendbare Epoxidverbindungen finden sich in der EP0506617.

II)Glycidyl- oder (b-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie $C_7$-$C_9$-Alkanol- und $C_9$-$C_{11}$-Alkanolgemischen.

Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.

III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-, N,N',N''-Triund N,N',N'',N'''-Tetraglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.

IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.

V) Epoxidverbindungen mit einem Rest der Formel I, worin $R_1$ und $R_3$ zusammen $-CH_2-CH_2-$ bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der Formell, worin $R_1$ und $R_3$ zusammen $-CH_2-CH_2-$ sind und n 1 bedeutet, ist beispielsweise 3,4-Epoxy-6-methyl-cyclohexancarbonsäure-(3',4'-epoxy-6'-methyl-cyclohexyl)-methylester.

Geeignete endständige Epoxide sind beispielsweise ( ™ bedeutet®):

a) flüssige Bisphenol-A-diglycidylether wie Araldit™GY 240, Araldit™Gy 250, Araldit™Gy 260, Araldit™Gy 266, Araldit™Gy 2600, Araldit™My 790;
b) feste Bisphenol-A-diglycidylether wie Araldit™GT 6071, Araldit™GT 7071, Araldit™GT 7072, Araldit™GT 6063, Araldit™GT 7203, Araldit™GT 6064, Araldit™GT 7304, Araldit™GT 7004, Araldit™GT 6084, Araldit™GT 1999, Araldit™GT 7077, Araldit™GT 6097, Araldit™GT 7097, Araldit™GT 7008, Araldit™GT 6099, Araldit™GT 6608, Araldit™GT 6609, Araldit™GT 6610;
c) flüssige Bisphenol-F-diglycidylether wie Araldit™Gy 281, Araldit™Py 302, Araldit™Py 306;
d) feste Polyglycidylether von Tetraphenylethan wie CG Epoxy Resin™0163;
e) feste und flüssige Polyglycidylether von Phenolformaldehyd Novolak wie EPN 1138, EPN 1139, GY 1180, PY 307;
f) feste und flüssige Polyglycidylether von o-Cresolformaldehyd Novolak wie ECN 1235, ECN 1273, ECN 1280, ECN 1299;
g) flüssige Glycidylether von Alkoholen wie Shell™ Glycidylether 162, Araldit™Dy 0390, Araldit™Dy 0391;
h) flüssige Glycidylether von Carbonsäuren wie Shell™Cardura E Terephthalsäureester, Tri mellithsäureester, Araldit™Py 284;
i) feste heterocyclische Epoxidharze (Triglycidylisocyanurat) wie Araldit™ PT 810;
j) flüssige cycloaliphatische Epoxidharze wie Araldit™Cy 179;
k) flüssige N,N,O-Triglycidylether von p-Aminophenol wie Araldit™MY 0510;
l) Tetraglycidyl-4-4'-methylenbenzamin oder N,N,N',N'-Tetraglycidyldiaminophenylmethan wie Araldit™My 720, Araldit™My 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.

Vorwiegend werden Epoxidverbindungen, vor allem Diglycidylverbindungen, mit aromatischen Gruppen eingesetzt.

Gegebenenfalls kann auch ein Gemisch verschiedener Epoxidverbindungen eingesetzt werden.

Besonders bevorzugt sind als endständige Epoxidverbindungen Diglycidylether auf der Basis von Bisphenolen, wie beispielsweise von 2,2-Bis-(4-hydroxyphenyl)-propan (BisphenolA), Bis-(4-hydroxyphenyl)-methan oder Mischungen von Bis-(ortho/para-hydroxyphenyl)-methan (BisphenolF).

Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

*beta-Diketone, beta-Ketoester,*

Verwendbare 1,3-Dicarbonylverbindungen können lineare oder cyclische Dicarbonylverbindungen sein. Bevorzugt werden Dicarbonylverbindungen der folgenden Formel verwandt,

$R'_1CO\ CHR_2'-COR'_3$

worin $R'_1$ $C_1$-$C_{22}$-Alkyl, $C_5$-$C_{10}$-Hydroxyalkyl, $C_2$-$C_{18}$-Alkenyl, Phenyl, durch OH, $C_1$-$C_4$-Alkyl, $C_1$-$C_4$-Alkoxy oder Halogen substituiertes Phenyl, $C_7$-$C_{10}$-Phenylalkyl, $C_5$-$C_{12}$-Cycloalkyl, durch $C_1$-$C_4$-Alkyl substituiertes $C_5$-$C_{12}$-Cycloalkyl oder eine Gruppe -$R'_5$-S-$R'_6$ oder -$R'_5$-O-$R'_6$ bedeutet, $R_2$ Wasserstoff, $C_1$-$C_8$-Alkyl $C_2$-$C_{12}$-Alkenyl, Phenyl, $C_7$-$C_{12}$-Alkylphenyl, $C_7$-$C_{10}$-Phenylalkyl oder eine Grupe -CO-$R'_4$ bedeutet, $R'_3$ eine der für $R'_1$ gegebenen Bedeutungen hat oder $C_1$-$C_{18}$-Alkoxy bedeutet, $R'_4$ $C_1$-$C_4$-Alkyl oder Phenyl bedeutet,

$R'_5$ $C_1$-$C_{10}$-Alkylen bedeutet und $R'_6$ $C_1$-$C_{12}$-Alkyl Phenyl, $C_7$-$C_{18}$-Alkylphenyl oder $C_7$-$C_{10}$-Phenylalkyl bedeutet.

Hierzu gehören die Hydroxylgruppen enthaltenden Diketone der EP-346 279 und die Oxa- und Thia-diketone der EP-307 358 ebenso wie die auf Isocyansäure basierenden Ketoester der US 4,339,383.

$R'_1$ und $R'_3$ als Alkyl können insbesondere $C_1$-$C_{18}$-Alkyl sein, wie z.B. Methyl, Ethyl, n-Propyl, Isopropyl, n-Butyl, tert Butyl, Pentyl, Hexyl, Heptyl, Octyl, Decyl, Dodecyl oder Octadecyl.

$R'_1$ und $R'_3$ als Hydroxyalkyl stellen insbesondere eine Gruppe $-(CH_2)_n$-OH dar, worin n 5, 6 oder 7 ist.

$R'_1$ und $R'_3$ als Alkenyl können beispielsweise Vinyl, Allyl, Methallyl, 1-Butenyl, 1-Hexenyl oder Oleyl bedeuten, vorzugsweise Allyl.

$R'_1$ und $R'_3$ als durch OH, Alkyl, Alkoxy oder Halogen substituiertes Phenyl können beispielsweise Tolyl, Xylyl, tert Butylphenyl, Methoxyphenyl, Ethoxyphenyl, Hydroxyphenyl, Chlorphenyl oder Dichlorphenyl sein.

$R'_1$ und $R'_3$ als Phenylalkyl sind insbesondere Benzyl. $R'_2$ und $R'_3$ als Cycloalkyl oder Alkyl-cycloalkyl sind insbesondere Cyclohexyl oder Methylcyclohexyl.

$R'_2$ als Alkyl kann insbesondere $C_1$-$C_4$-Alkyl sein. $R'_2$ als $C_2$-$C_{12}$-Alkenyl kann insbesondere Allyl sein. $R'_2$ als Alkylphenyl kann insbesondere Tolyl sein. $R'_2$ als Phenylalkyl kann insbesondere Benzyl sein. Vorzugsweise ist $R'_2$ Wasserstoff. $R'_3$ als Alkoxy kann z.B. Methoxy, Ethoxy, Butoxy, Hexyloxy, Octyloxy, Dodecyloxy, Tridecyloxy, Tetradecyloxy oder Octadecyloxy sein. $R'_5$ als $C_1$-$C_{10}$-Alkylen ist insbesondere $C_2$-$C_4$-Alkylen. $R'_6$ als Alkyl ist insbesondere $C_4$-$C_{12}$-Alkyl, wie z.B. Butyl, Hexyl, Octyl, Decyl oder Dodecyl. $R'_6$ als Alkylphenyl ist insbesondere Tolyl. $R'_6$ als Phenylalkyl ist insbesondere Benzyl.

Beispiele für 1,3-Dicarbonylverbindungen der obigen Formel sowie deren Alkali-, Erdalkali- und Zinkchelate sind Acetylaceton, Butanoylaceton, Heptanoylaceton, Stearoylaceton, Palmitoylaceton, Lauroylaceton, 7-tertNonylthio-heptandion-2,4, Benzoylaceton, Dibenzoylmethan, Lauroylbenzoylmethan, Palmitoylbenzoylmethan, Stearoylbenzoylmethan, Isooctylbenzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl-benzoylmethan, Bis (4-methoxybenzoyl)-methan, 1-Benzoyl-1-acetylnonan, Benzoyl-acetyl-phenylmethan, Stearoyl-4-methoxybenzoylmethan, Bis(4-tert-butylbenzoyl)methan, Benzoylformylmethan, Benzoyl-phenylacetylmethan, Bis-cyclohexanoyl-methan, Dipivaloyl-methan, 2-Acetylcyclopentanon, 2-Benzoylcyclo-pentanon, Diacetessigsäuremethyl-, -ethyl- und -allylester, Benzoyl-, Propionyl- und Butyryl-acetessigsäuremethyl- und -ethylester, Triacetylmethan, Acetessigsäuremethyl-, -ethyl-, -hexyl-, -octyl-, -dodecyl- oder -octadecylester, Benzoylessigsäuremethyl-, -ethyl-, -butyl-, -2-ethylhexyl-, -dodecyl- oder-octadecylester, sowie Propionyl- und Butyrylessigsäure-$C_1$-$C_{18}$-alkylester. Stearoylessigsäureethyl-, -propyl-, -butyl-, -hexyl- oder -octylester sowie mehrkernige β-Ketoester wie in EP 433.230 beschrieben und Dehydracetsäure sowie deren Zink-, Magnesium- oder Alkalisalze.

Bevorzugt sind 1,3-Diketoverbindungen der obigen Formel, worin $R'_1$ $C_1$-$C_{18}$-Alkyl, Phenyl, durch OH, Methyl oder Methoxy substituiertes Phenyl, $C_7$-$C_{10}$-Phenylalkyl oder Cyclohexyl ist, $R'_2$ Wasserstoff ist und $R'_3$ eine der für $R'_1$ gegebenen Bedeutungen hat.

Die 1,3-Diketoverbindungen können in einer Menge von beispielsweise 0,01 bis 10, zweckmäßig 0,01 bis 3

und insbesondere 0,01 bis 2 Gew.-Teilen, bezogen auf 100 Gew.-Teile PVC, angewandt werden.

*Dihydropyridine, Polydihydropyridine*

Als monomere Dihydropyridine kommen Verbindungen, wie z.B. in FR 2039496, EP 2007 , EP 362012 und EP 24754 beschrieben, in Frage. Bevorzugt sind solche der Formel

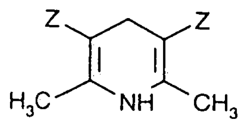

, worin Z für $CO_2CH_3$, $CO_2C_2H_5$, $CO_2{}^nC_{12}H_{25}$ oder $-CO_2C_2H_4-S-{}^nC_{12}H_{25}$ steht.

Als Polydihydropyridine kommen vor allem Verbindungen der folgenden Formel in Frage

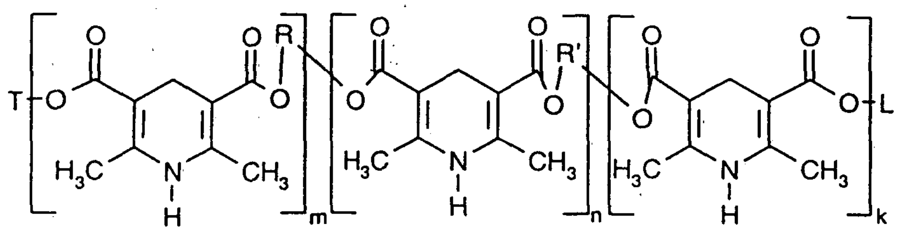

worin T für unsubstituiertes $C_{1-12}$ Alkyl steht.
L dieselben Bedeutungen wie T hat.
m und n Zahlen von 0 bis 20 bedeuten,
k 0 oder 1 ist,
R und R' unabhängig voneinander Aethylen, Propylen, Butylen oder eine Alkylenoder Cycloalkylenbismethylengruppe des Typs $-(-C_pH_{2p}-X-)_tC_pH_{2p}-$ sind.
p 2 bis 8 ist,
t 0 bis 10 ist
X für Sauerstoff oder Schwefel steht.

Solche Verbindungen sind in EP-0286887 näher beschrieben.

Die (Poly-)Dihydropyridine können im chlorhaltigen Polymer zweckmäßig zu 0,001 bis 5 und insbesondere 0,005 bis 1 Gew.-Teilen, bezogen auf das Polymer, angewandt werden.

Besonders bevorzugt ist Thiodiethylen-bis-[5-methoxycarbonyl-2,6-dimethyl-1,4-dihydro pyridin-3-carboxylat].

Besonders bevorzugt ist Thiodiethylen-bis-[5-methoxycarbonyl-2,6-dimethyl-1,4-dihydropyridin-3-carboxylat].

*Polyole, Disaccharidalkohole*

Als Verbindungen dieses Typs kommen beispielsweise in Betracht:
Pentaerythrit, Dipentaerythrit, Tripentaerythrit, Bistrimethylolpropan, Inosit, Polyvinylalkohol, Bistrimethylolethan, Trismethylolpropan, Sorbit, Maltit, Isomaltit, Lactit, Lycasin, Mannit, Lactose, Leucrose, Tris-(hydroxyethyl)-isocyanurat, Palatinit, Tetramethylolcyclohexanol, Tetramethylolcyclopentanol,
Tetramethylolcyclopyranol, Glycerin, Diglycerin, Polyglycerin, Thiodiglycerin oder 1-0-a-D-Glycopyranosyl-D-mannitdihydrat. Bevorzugt sind davon die Disaccharidalkohole.
Die Polyole können in einer Menge von beispielsweise 0,01 bis 20, zweckmäßig 0,1 bis 20 und insbesondere 0,1 bis 10 Gew.-Teilen, bezogen auf 100 Gew.-Teile PVC, angewandt werden.

*Sterisch gehinderte Amine (Tetraalkylpiperidinverbindungen)*

Die erfindungsgemäß verwendbaren sterisch gehindeten Amine, vorzugsweise Piperidinverbindungen, sind vor allem als Lichtschutmittel bekannt. Diese Verbindungen enthalten eine Gruppe der Formel

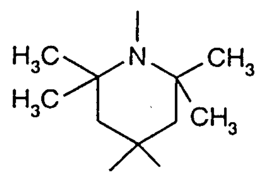

ein- oder mehrfach. Es können Verbindungen von relativ niedrigem Molekulargewicht (<700) oder von höherem Molekulargewicht sein. In letzterem Fall kann es sich auch um oligomere oder polymere Produkte handeln. Bevorzugt sind Tetramethylpiperidinverbindungen mit einem Molekulargewicht größer als 700, welche keine Estergruppen enthalten.

Von Bedeutung als Stabilisatoren sind insbesondere die folgenden Klassen von Tetramethylpiperidinverbindungen.

Bei den folgenden Klassen a) bis f) entsprechen (aus technischen Gründen) Substituenten mit tiefgestelltem Index in der Formelzeichnung den Substituenten mit hochgestelltem Index in der Erläuterung oder Definition, welche zu der jeweiligen Formelzeichnung gehört. Der Substituent "$R_1$" in der Formel (II), beispielsweise, entspricht daher "$R^1$" in den Erläuterungen.

a) Verbindungen der Formel II

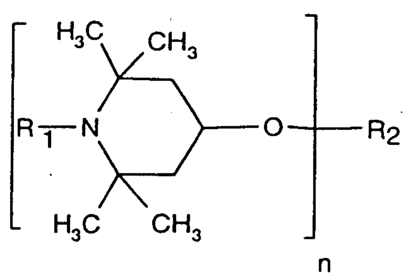

(II),

worin n eine Zahl von 1 bis 4, vorzugsweise 1 oder 2 bedeutet, $R^1$ Wasserstoff, Oxyl, $C_1$-$C_{12}$-Alkyl, $C_3$-$C_8$-Alkenyl, $C_3$-$C_8$-Alkinyl, $C_7$-$C_{12}$-Aralkyl, $C_1$-$C_8$-Alkanoyl, $C_3$-$C_5$-Alkenoyl, Glycidyl oder eine Gruppe $-CH_2CH(OH)-Z$, worin Z Wasserstoff, Methyl oder Phenyl ist, bedeutet, wobei $R^1$ vorzugsweise $C_1$-$C_4$-Alkyl, Allyl, Benzyl, Acetyl oder Acryloyl ist und $R^2$, wenn n 1 ist, Wasserstoff, gegebenenfalls durch ein oder mehrere Sauerstoffatome unterbrochenes $C_1$-$C_{18}$-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wenn n 2 ist, $C_1$-$C_{12}$-Alkylen, $C_4$-$C_{12}$-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten $C_1$-$C_{12}$-Alkyl, so stellen sie z.B. Methyl, Ethyl, n-Propyl, n-Butyl, sek.-Butyl, tert-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$-Alky kann $R^2$ z.B. die oben angeführten Gruppen und dazu noch beispielsweise n-Tridecyl, n-Tetradecyl, n-Hexadecyl oder n-Octadecyl darstellen.

Wenn $R^1$ $C_3$-$C_8$-Alkenyl bedeutet, so kann es sich z.B. um 1-Propenyl, Allyl, Methallyl, 2-Butenyl, 2-Pentenyl, 2-Hexenyl, 2-Octenyl, 4-tert-Butyl-2-butenyl handeln.

$R^1$ ist als $C_3$-$C_8$-Alkinyl bevorzugt Propargyl.

Als $C_7$-$C_{12}$-Aralkyl ist $R^1$ insbesondere Phenethyl und vor allem Benzyl.

$R^1$ ist als $C_1$-$C_8$-Alkanoyl beispielsweise Formyl, Propionyl, Butyryl, Octanoyl, aber bevorzugt Acetyl und als $C_3$-$C_5$-Alkenoyl insbesondere Acryloyl.

Bedeutet $R^2$ einen einwertigen Rest einer Carbonsäure, so stellt es beispielsweise einen Essigsäure-, Capronsäure-, Stearinsäure-, Acrylsäure-, Methacrylsäure-, Benzoe- oder β-(3,5-Di-tert-butyl-4-hydroxyphenyl)-propionsäurerest dar.

Bedeutet $R^2$ einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Phthalsäure-, Dibutylmalonsäure-, Dibenzylmalonsäure-, Butyl-(3,5-di-tert-butyl-4-hydroxybenzyl)-malonsäureoder Bicycloheptendicarbonsäurerest dar.

Stellt $R^2$ einen dreiwertigen Rest einer Tricarbonsäure dar, so bedeutet es z.B. einen Trimellitsäure- oder einen Nitrilotriessigsäurerest.

Stellt $R^2$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $R^2$ einen zweiwertigen Rest einer Dicarbaminsäure, so stellt es beispielsweise einen Hexamethylendicarbaminsäure- oder einen 2,4-Toluylendicarbaminsäurerest dar.

Beispiele für Polyalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert-butyl-4-hydroxyphenyl)-propionat
9) Di-(1-benzyl-2,2,6,6-tetramethylpiperidin-4-yl)-maleinat
10)Di-(2,2,6,6-tetramethylpiperidin-4-yl)-succinat
11) Di-(2,2,6,6-tetramethylpiperidin-4-yl)-glutarat
12)Di-(2,2,6,6-tetramethylpiperidin-4-yl)-adipat
13)Di-(2,2,6,6-tetramethylpiperidin-4-yl)-sebacat
14)Di-(1,2,2,6,6-pentamethylpiperidin-4-yl)-sebacat
15)Di-(1,2,3,6-tetramethyl-2,6-diethyl-piperidin-4-yl)-sebacat
16)Di-(1-allyl-2,2,6,6-tetramethylpiperidin-4-yl)-phthalat
17)1-Propargyl-4-β-cyanoethyloxy-2,2,6,6-tetramethylpiperidin
18)1-Acetyl-2,2,6,6-tetramethylpiperidin-4-yl-acetat
19)Trimellithsäure-tri-(2,2,6,6-tetramethylpiperidin-4-yl)-ester
20) 1-Acryloyl-4-benzyloxy-2,2,6,6-tetramethylpiperidin
21)Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert-butyl-4-hydroxybenzyl)-malonsäure-di-(1,2,2,6,6-pentamethylpiperidin-4-yl)-ester
24) Dibenzyl-malonsäure-di-(1,2,2,6,6-pentamethylpiperidin-4-yl)-ester
25) Dibenzyl-malonsäure-di-(1,2,3,6-tetramethyl-2,6-diethyl-piperidin-4-yl)-ester
26) Hexan-1',6'-bis-(4-carbamoyloxy-1-n-butyl-2,2,6,6-tetramethyl-piperidin)
27) Toluol-2',4'-bis-(4-carbamoyloxy-1-n-propyl-2,2,6,6-tetramethyl-piperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31)Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

b) Verbindungen der Formel (III)

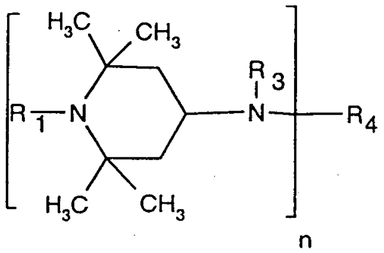

(III),

worin n die Zahl 1 oder 2 bedeutet, $R^1$ die unter a) angegebene Bedeutung hat, $R^3$ Wasserstoff, $C_1$-$C_{12}$-Alkyl, $C_2$-$C_5$-Hydroxyalkyl, $C_5$-$C_7$-Cycloalkyl, $C_7$-$C_8$-Aralkyl, $C_2$-$C_{18}$-Alkanoyl, $C_3$-$C_5$-Alkenoyl oder Benzoyl ist und $R^4$ wenn n 1 ist, Wasserstoff, $C_1$-$C_{18}$-Alkyl, $C_3$-$C_8$-Alkenyl, $C_5$-$C_7$-Cycloalkyl, mit einer Hydroxy-, Cyano-, Alkoxycarbonyl- oder Carbamidgruppe substituiertes $C_1$-$C_4$-Alkyl, Glycidyl, eine Gruppe der Formel $-CH_2-CH(OH)-Z$ oder der Formel-CONH-Z ist, worin Z Wasserstoff, Methyl oder Phenyl bedeutet; wenn n 2 ist, $C_2$-$C_{12}$-Alkylen, $C_6$-$C_{12}$-Arylen, Xylylen, eine $-CH_2-CH(OH)-CH_2$-Gruppe oder eine Gruppe $-CH_2-CH(OH)-CH_2-O-D-O-$ bedeutet, worin D $C_2$-$C_{10}$-Alkylen, $C_6$-$C_{15}$-Arylen, $C_6$-$C_{12}$-Cycloalkylen ist, oder vorausgesetzt, daß
$R^3$ nicht Alkanoyl, Alkenoyl oder Benzoyl bedeutet, $R^4$ auch einen zweiwertigen Rest einer aliphatischen, cycloaliphatischen oder aromatischen Dicarbonsäure oder Dicarbaminsäure oder auch die Gruppe *-CO-* bedeuten kann, oder $R^3$ und $R^4$ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$-Alkyl dar, so haben sie die bereits unter a) angegebene Bedeutung.

Bedeuten etwaige Substituenten $C_5$-$C_7$-Cycloalkyl, so stellen sie insbesondere Cyclohexyl dar.

Als $C_7$-$C_8$-Aralkyl ist $R^3$ insbesondere Phenylethyl oder vor allem Benzyl. Als $C_2$-$C_5$-Hydroxyalkyl ist $R^3$ insbesondere 2-Hydroxyethyl oder 2-Hydroxypropyl. $R^3$ ist als $C_2$-$C_{18}$-Alkanoyl beispielsweise Propionyl, Butyryl, Octanoyl, Dodecanoyl, Hexadecanoyl, Octadecanoyl, aber bevorzugt Acetyl und als $C_3$-$C_5$-Alkenoyl insbesondere Acryloyl.

Bedeutet $R^4$ $C_2$-$C_8$-Alkenyl, dann handelt es sich z.B. um Allyl, Methallyl, 2-Butenyl, 2-Pentenyl, 2-Hexenyl oder 2-Octenyl.

$R^4$ als mit einer Hydroxy-, Cyano-, Alkoxycarbonyl- oder Carbamidgruppe substituiertes $C_1$-$C_4$-Alkyl kann z. B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4'-Diphenylen dar.

Als $C_6$-$C_{12}$-Cycloalkylen ist D insbesondere Cyclohexylen.

Beispiele für Polyalkylpiperidin-Verbindungen dieser Klasse sind folgende Verbindungen:

37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-diacetamid und -1,6-diformamid
39) 1-Acetyl-4-(N-cyclohexylacetamido)-2,2,6,6-tetramethylpiperidin
40) 4-Benzoylamino-2,2,6,6-tetramethylpiperidin
41)N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethylpiperidin-4-yl)-ester
46) Die Verbindung der Formel

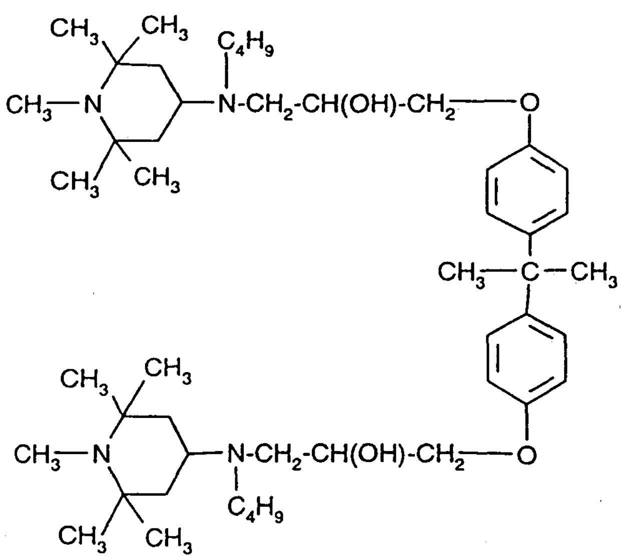

47) 4-(Bis-2-hydroxyethyl-amino)-1,2,2,6,6-pentamethylpiperidin
48) 4-(3-Methyl-4-hydroxy-5-tert-butyl-benzoesäureamido)-2,2,6,6-tetramethylpiperidin
49) 4-Methacrylamido-1,2,2,6,6-pentamethylpiperidin

c) Verbindungen der Formel (IV)

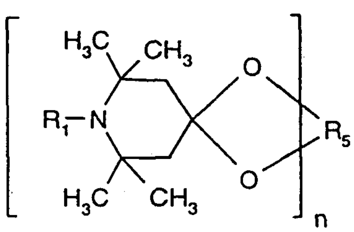

(IV),

worin n die Zahl 1 oder 2 bedeutet, $R^1$ die unter a) angegebene Bedeutung hat und $R^5$, wenn n 1 ist, $C_2$-$C_8$-Alkylen oder $C_2$-$C_8$-Hydroxyalkylen oder $C_4$-$C_{22}$-Acyloxyalkylen, und wenn n 2 ist, die Gruppe $(-CH_2)_2C(CH_2-)_2$ bedeutet.
Bedeutet $R^5$ $C_2$-$C_8$-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.
Als $C_4$-$C_{22}$-Acyloxyalkylen bedeutet $R^5$ z.B. 2-Ethyl-2-acetoxymethylpropylen.
Beispiele für Polyalkylpiperidin-Verbindungen dieser Klasse sind folgende Verbindungen:

50) 9-Aza-8,8,10,10-tetramethyl-1,5-dioxaspiro[5.5]undecan
51)9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro-[5.5]undecan
54) 9-Aza-3-ethyl-3-acetoxymethyl-9-acetyl-8,8,10,10-tetramethyl-1,5-dioxaspiro[5.5]undecan
55) 2,2,6,6-Tetramethylpiperidin-4-spiro-2'-(1',3'-dioxan)-5'-spiro-5"-(1",3"dioxan)-2"-spiro-4'"-(2'",2'",6'",6'"-tetramethylpiperidin).

d) Verbindungen der Formeln VA, VB und VC

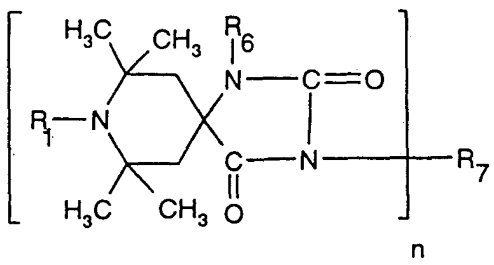

(VA)

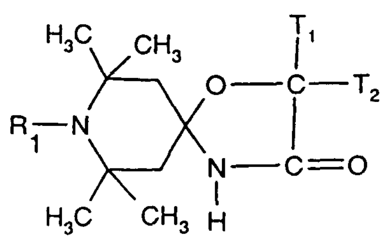

(VB)

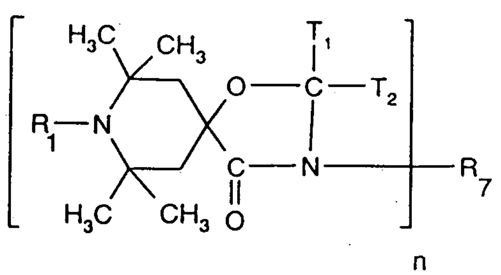

(VC)

worin n die Zahl 1 oder 2 bedeutet, $R^1$ die unter a) angegebene Bedeutung hat, $R^6$ Wasserstoff, $C_1$-$C_{12}$-Alkyl, Allyl, Benzyl, Glycidyl oder $C_2$-$C_6$-Alkoxyalkyl ist und $R^7$, wenn n 1 ist, Wasserstoff, $C_1$-$C_{12}$-Alkyl, $C_3$-$C_5$-Alkenyl, $C_7$-$C_9$-Aralkyl, $C_5$-$C_7$-Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)_p$-COO-Q oder der Formel $-(CH_2)_p$-O-CO-Q ist, worin p 1 oder 2 und Q $C_1$-$C_4$-Alkyl oder Phenyl sind, wenn n 2 ist, $C_2$-$C_{12}$-Alkylen, $C_4$-$C_{12}$-Alkenylen, $C_6$-$C_{12}$-Arylen, eine Gruppe $-CH_2-CH(OH)-CH_2-0-D-O-CH_2-CH(OH)-CH_2-$, worin D $C_2$-$C_{10}$-Alkylen, $C_6$-$C_{15}$-Arylen, $C_6$-$C_{12}$-Cycloalkylen ist, oder eine Gruppe $-CH_2CH(OZ')CH_2-(OCH_2-CH(OZ')CH_2)_2$bedeutet, worin Z' Wasserstoff, $C_1$-$C_{18}$-Alkyl, Allyl, Benzyl, $C_2$-$C_{12}$-Alkanoyl oder Benzoyl ist, $T_1$ und $T_2$ unabhängig voneinander Wasserstoff, $C_1$-$C_{18}$-Alkyl oder gegebenenfalls durch Halogen oder $C_1$-$C_4$-Alkyl substituiertes $C_6$-$C_{10}$-Aryl oder $C_7$-$C_9$-Aralkyl bedeuten oder $T_1$ und $T_2$ zusammen mit dem sie bindenden C-Atom einen $C_5$-$C_{12}$-Cycloalkanring bilden.

Bedeuten etwaige Substituenten $C_1$-$C_{12}$-Alkyl, so stellen sie z.B. Methyl, Ethyl, n-Propyl, n-Butyl, sek.-Butyl, tert-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$-Alkoxyalkyl, so stellen sie z.B. Methoxymethyl, Ethoxymethyl, Propoxymethyl, tert-Butoxymethyl, Ethoxyethyl, Ethoxypropyl, n-Butoxyethyl, tert-Butoxyethyl, Isopropoxyethyl oder Pro-

poxypropyl dar.

Stellt $R^7$ $C_3$-$C_5$-Alkenyl dar, so bedeutet es z.B. 1-Propenyl, Allyl, Methallyl, 2-Butenyl oder 2-Pentenyl.

Als $C_7$-$C_9$-Aralkyl sind $R^7$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $R^7$ $C_2$-$C_4$-Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$-Aryl bedeuten $R^7$, $T_1$ und $T_2$ insbesondere Phenyl, $\alpha$- oder $\beta$-Naphthyl, die gegebenenfalls mit Halogen oder $C_1$-$C_4$-Alkyl substituiert sind.

Stellt $R^7$ $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$-$C_{12}$-Alkenylen bedeutet $R^7$ insbesondere 2-Butenylen, 2-Pentenylen oder 3-Hexenylen.

Bedeutet $R^7$ $C_6$-$C_{12}$-Arylen, so stellt es beispielsweise o-, m- oder p-Phenylen, 1,4-Naphthylen oder 4,4'-Diphenylen dar.

Bedeutet Z' $C_2$-$C_{12}$-Alkanoyl, so stellt es beispielsweise Propionyl, Butyryl, Octanoyl, Dodecanoyl, aber bevorzugt Acetyl dar.

D hat als $C_2$-$C_{10}$-Alkylen, $C_6$-$C_{15}$-Arylen oder $C_6$-$C_{12}$-Cycloalkylen die unter b) angegebene Bedeutung.

Beispiele für Polyalkylpiperidin-Verbindungen dieser Klasse sind folgende Verbindungen:

56) 3-Benzyl-1,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61)2-Iso-propyl-7,7,9,9-tetramethyl-1-oxa-3,8-diaza-4-oxo-spiro-[4.5]-decan
62) 2,2-Dibutyl-7,7,9,9-tetramethyl-1-oxa-3,8-diaza-4-oxo-spiro-[4.5]-decan
63) 2,2,4,4-Tetramethyl-7-oxa-3,20-diaza-21-oxo-dispiro-[5.1.11.2]-henei-cosan
64) 2-Butyl-7,7,9,9-tetramethyl-1-oxa-4,8-diaza-3-oxo-spiro-[4,5]decan
65) 8-Acetyl-3-dodecyl-1,3,8-triaza-7,7,9,9-tetramethylspiro[4,5]-decan-2,4-dion oder die Verbindungen der folgenden Formeln:

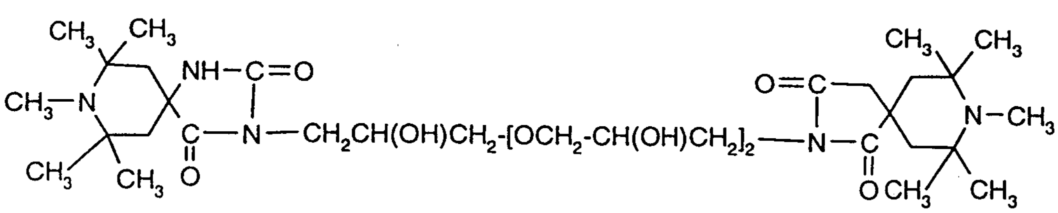

66)

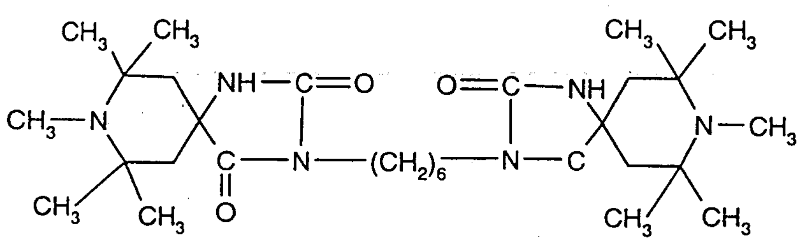

67)

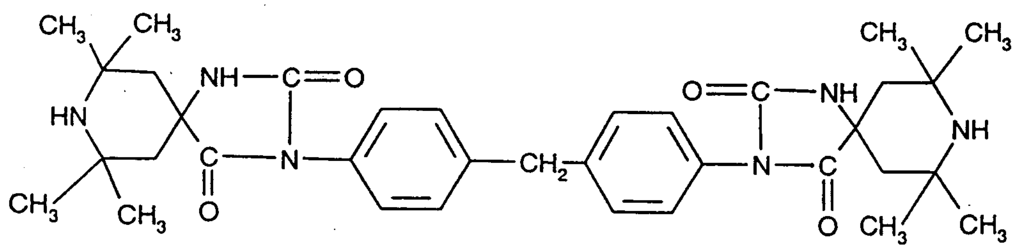

68)

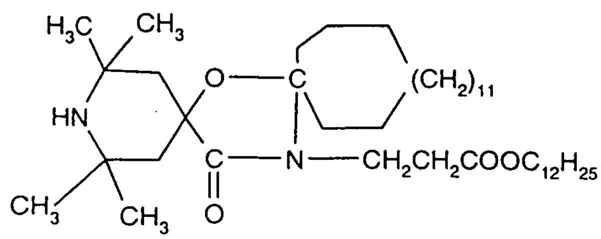

69)

e) Verbindungen der Formel VI

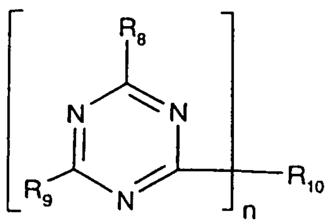

(VI),

worin n die Zahl 1 oder 2 ist und $R^8$ eine Gruppe der Formel

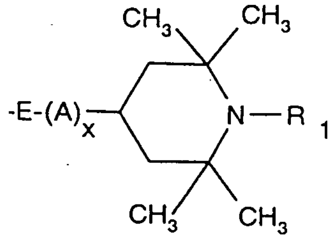

bedeutet, worin $R^1$ die unter a) angegebene Bedeutung hat, E -O- oder $-NR^{11}$ist, A $C_2$-$C_6$-Alkylen oder $-(CH_2)_3$-O- und x die Zahlen O oder 1 bedeuten, $R^9$ gleich $R^8$ oder eine der Gruppen $-NR^{11}R^{12}$, $-OR^{13}$, $-NHCH_2OR^{13}$ oder-N $(CH_2OR^{13})_2$ ist, $R^{10}$, wenn n = 1 ist, gleich $R^8$ oder $R^9$, und wenn n = 2 ist, eine Gruppe -E-B-E- ist, worin B gegebenenfalls durch $-N(R^{11})$- unterbrochenes $C_2$-$C_6$-Alkylen bedeutet, $R^{11}$ $C_1$-$C_{12}$-Alkyl, Cyclohexyl, Benzyl oder $C_1$-$C_4$-Hydroxyalkyl oder eine Gruppe der Formel

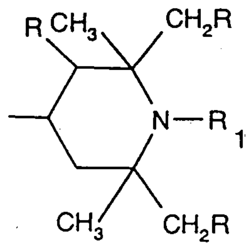

ist, $R^{12}$ $C_1$-$C_{12}$-Alkyl, Cyclohexyl, Benzyl, $C_1$-$C_4$-Hydroxyalkyl und $R^{13}$ Wasserstoff, $C_1$-$C_{12}$-Alkyl oder Phenyl bedeuten oder $R^{11}$ und $R^{12}$ zusammen $C_4$-$C_5$-Alkylen oder -Oxaalkylen, beispielsweise

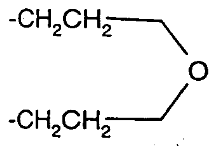

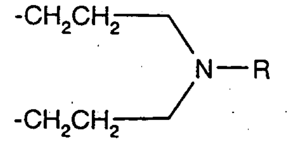

,

oder eine Gruppe der Formel

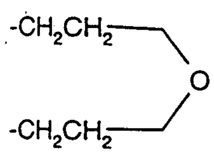

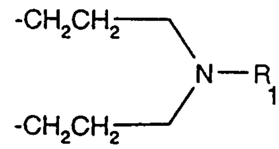

sind oder auch $R^{11}$ und $R^{12}$ jeweils eine Gruppe der Formel

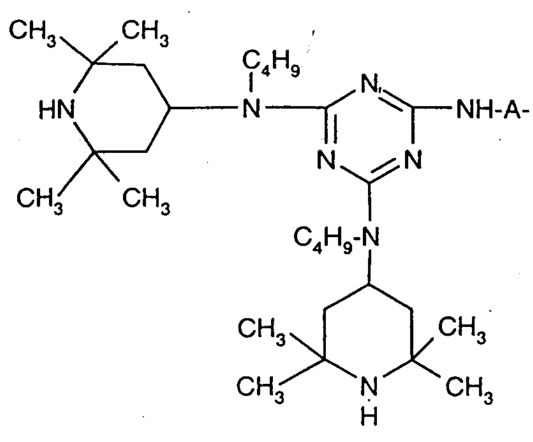

bedeuten.

Bedeuten etwaige Substituenten $C_1$-$C_{12}$-Alkyl, so stellen sie beispielsweise Methyl, Ethyl, n-Propyl, n-Butyl, sek.-Butyl, tert-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$-Alkylen, so stellt es beispielsweise Ethylen, Propylen, 2,2-Dimethylpropylen, Tetramethylen oder Hexamethylen dar.

Stellen $R^{11}$ und $R^{12}$ zusammen $C_4$-$C_5$-Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln:

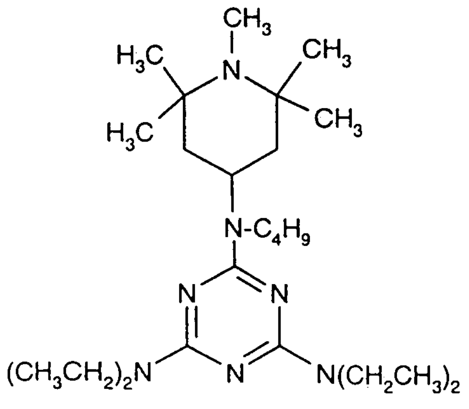

70)

71)

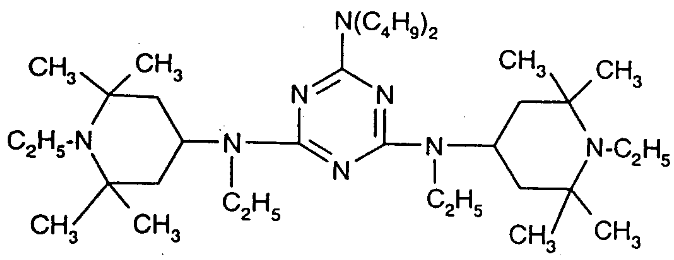

72)

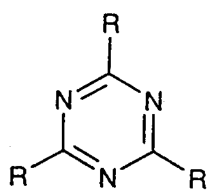

mit R =

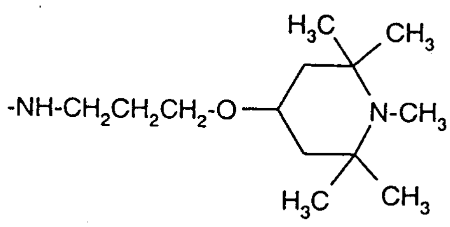

73)

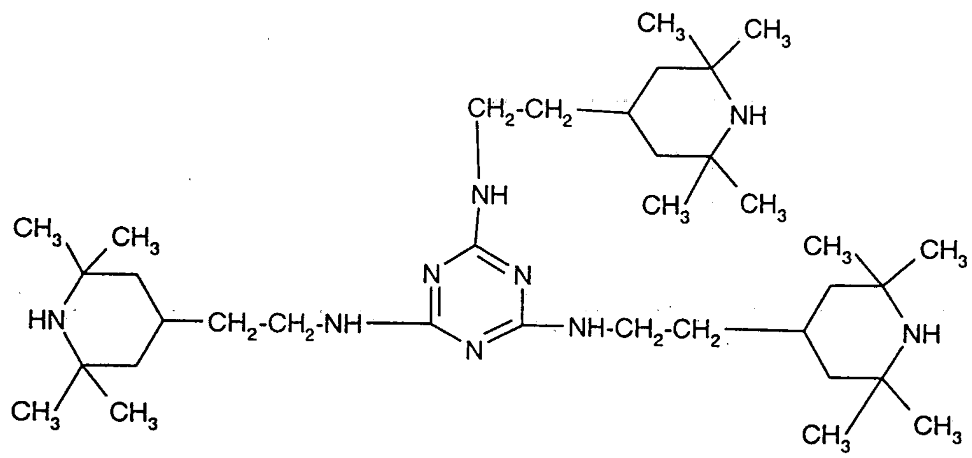

74)

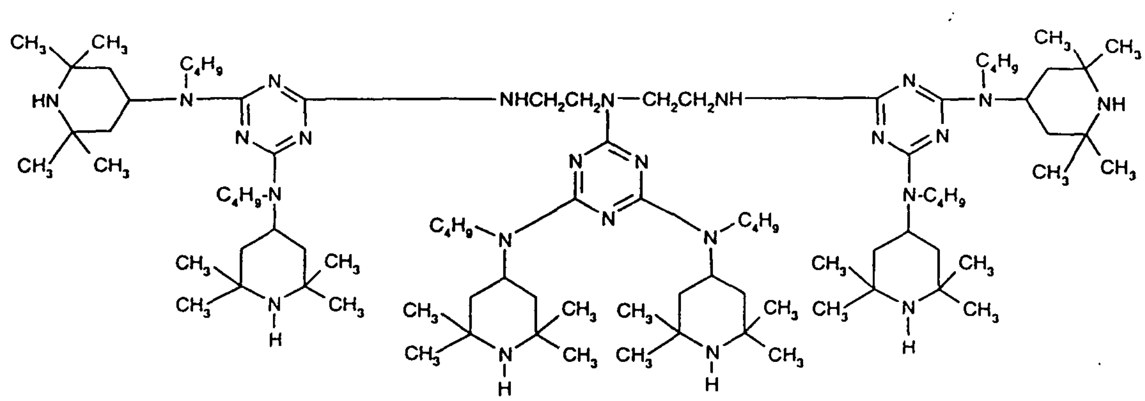

75)

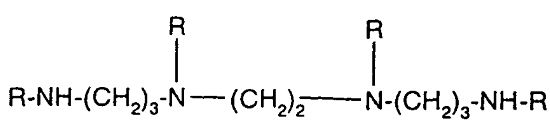

mit R =

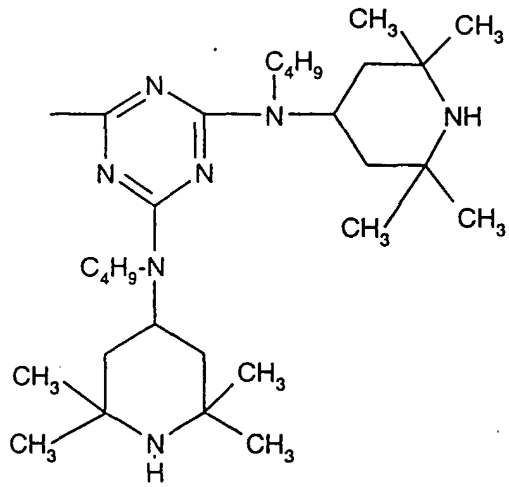

76)

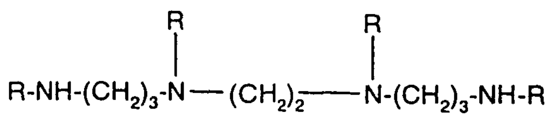

mit R =

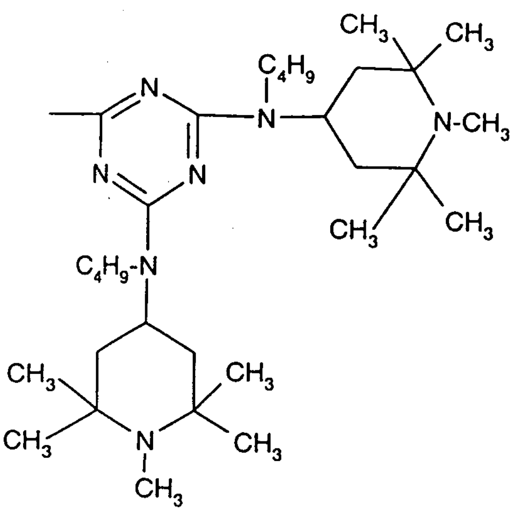

77)

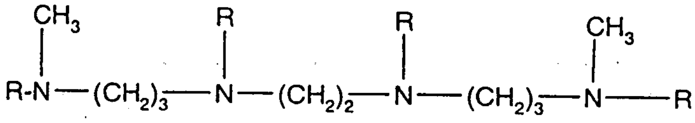

mit R =

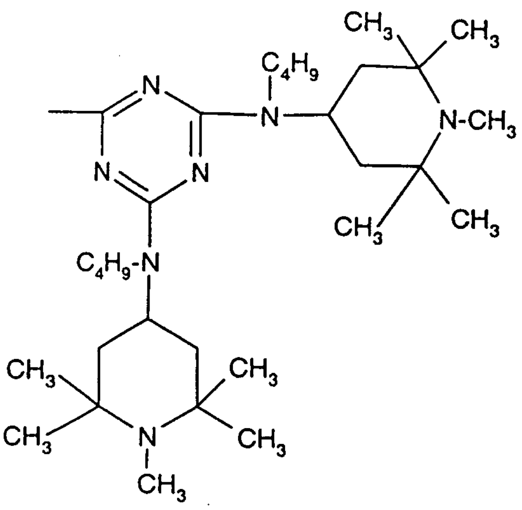

78)

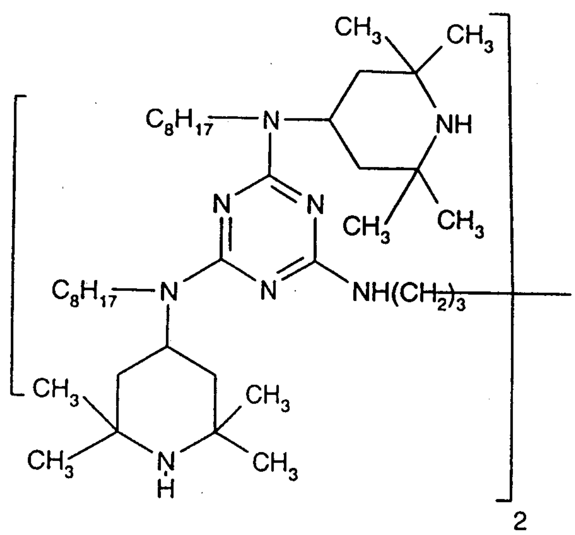

79)

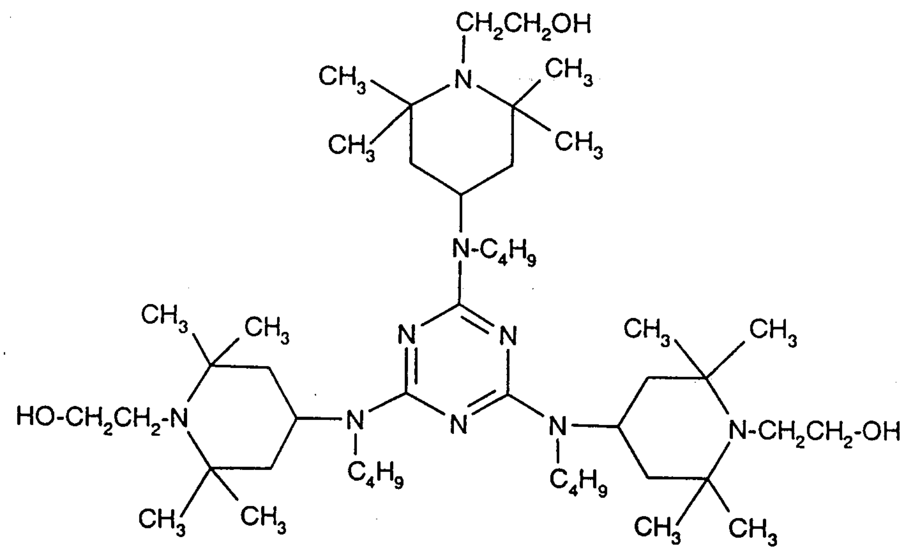

80)

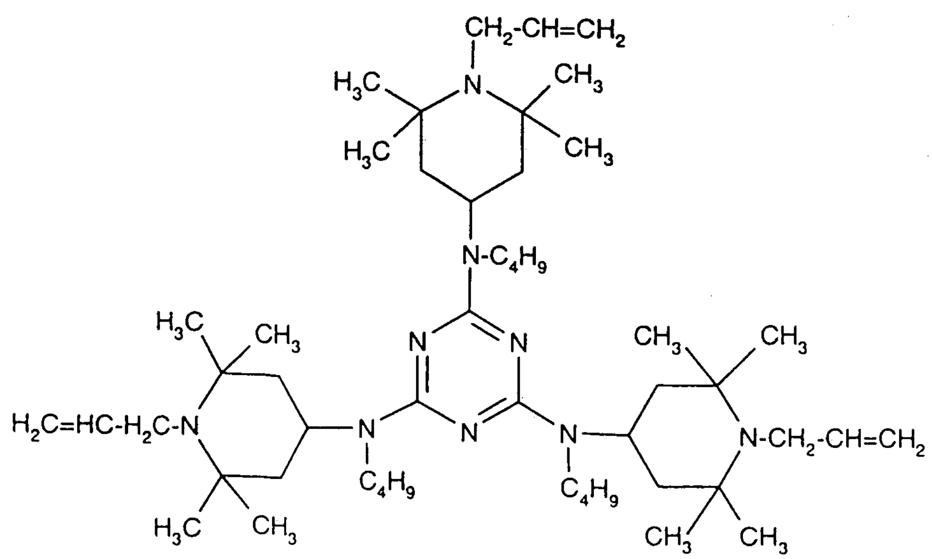

f) Oligomere oder polymere Verbindungen, deren wiederkehrende Struktureinheit einen oder mehrere 2,2,6,6-Tetraalkylpiperidinreste der Formel (I) enthält, insbesondere Polyester, Polyäther, Polyamide, Polyamine, Polyurethane, Polyharnstoffe, Polyaminotriazine, Poly(meth)acrylate, Polysiloxane, Poly(meth)acrylamide und deren Copolymeren, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

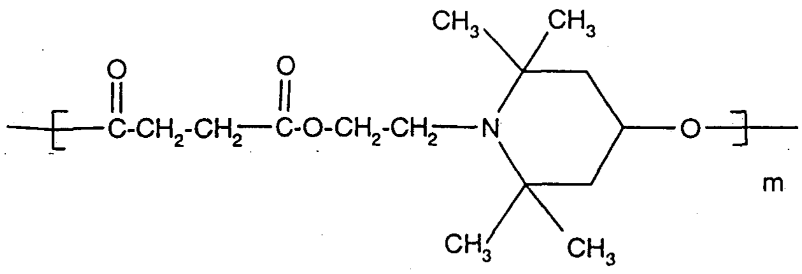

81)

82)

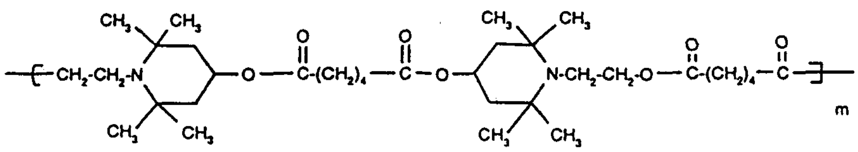

82)

83)

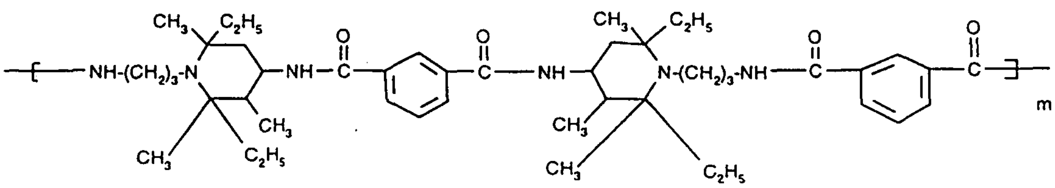

83)

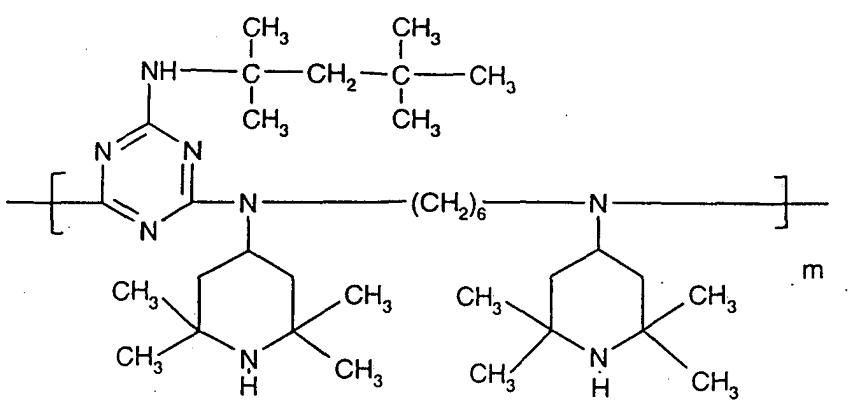

84)

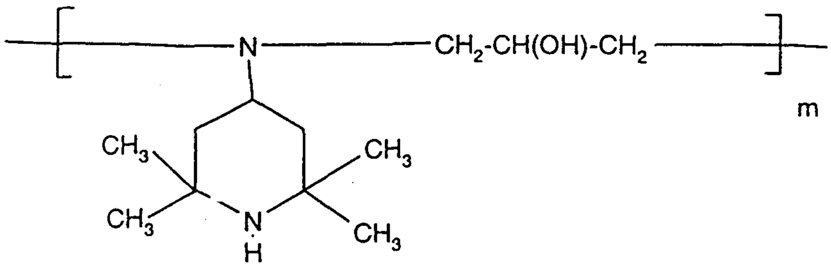

85)

86)

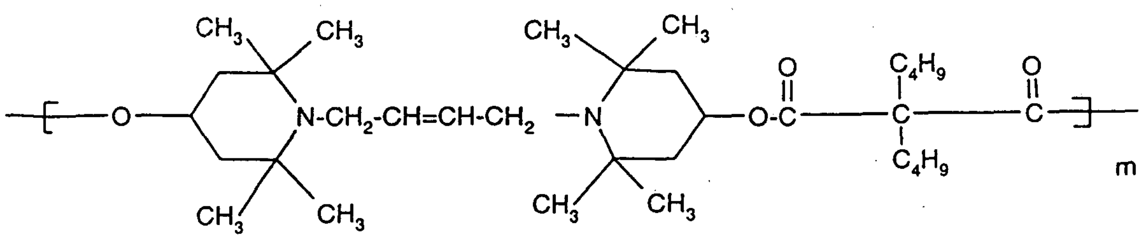

87)

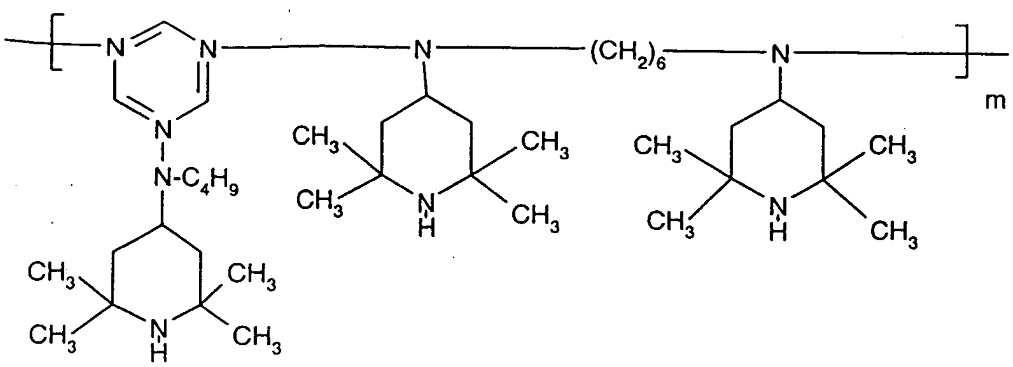

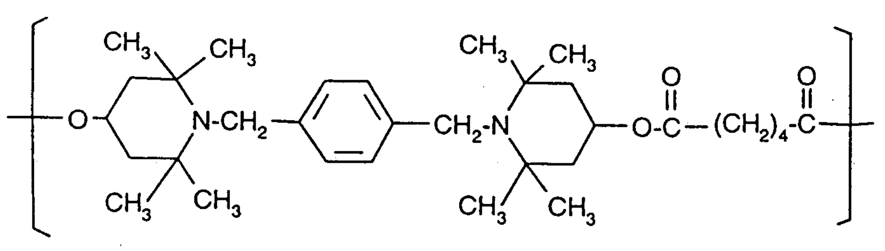

88)

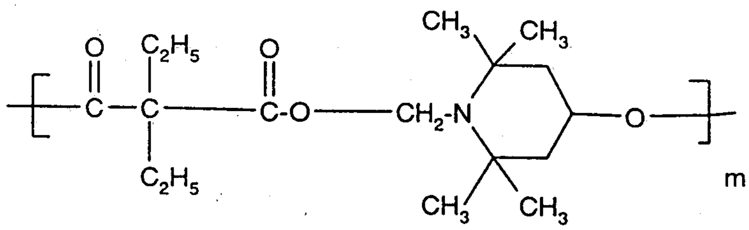

89)

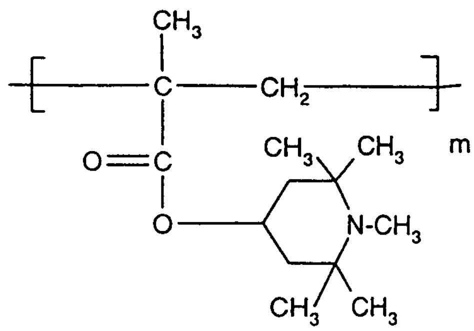

90)

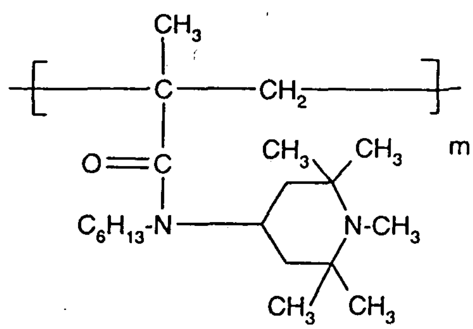

91)

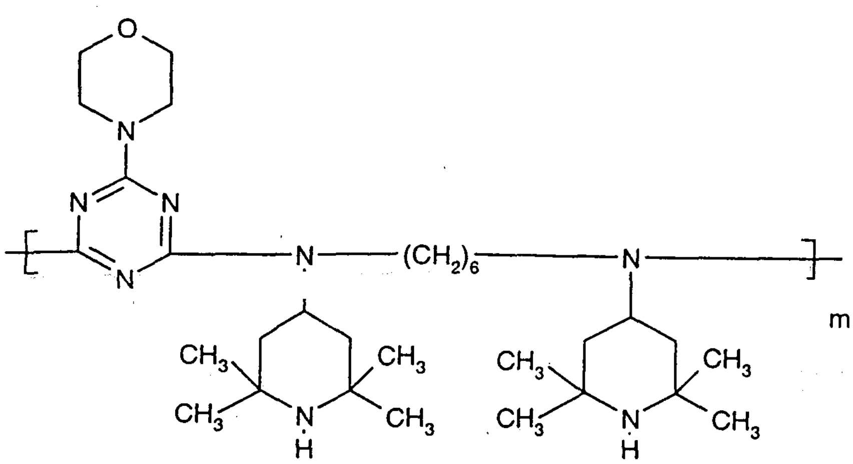

92)

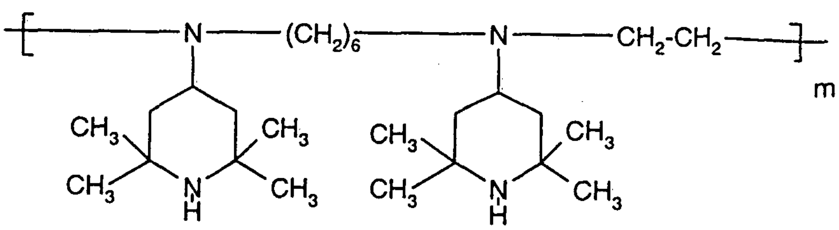

93)

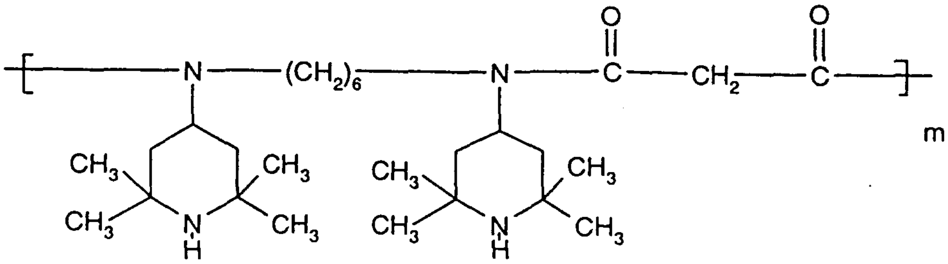

94)

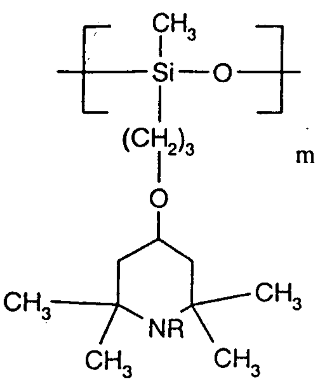

95)

mit R = H oder CH3

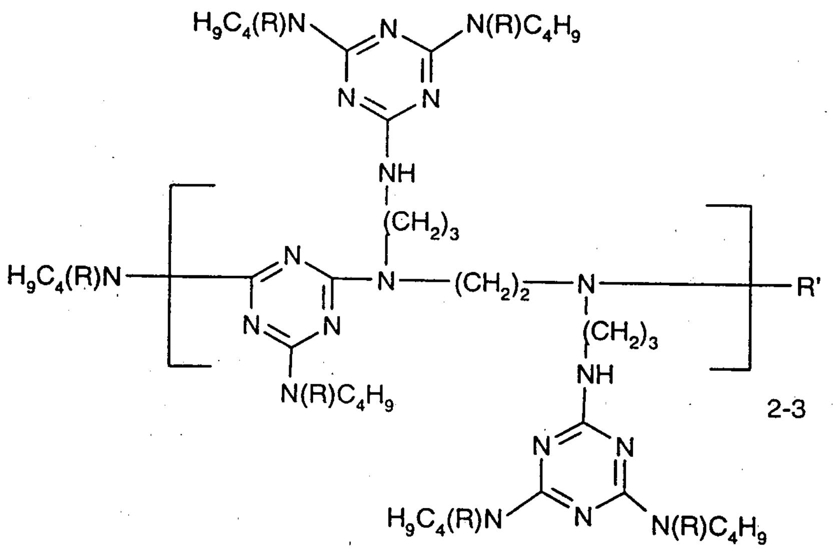

96)

mit R=

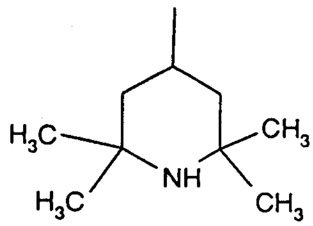

und R'=

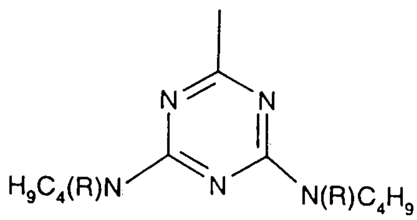

oder H {erhältlich durch Umsetzung des Reaktionsproduktes aus Trichlortriazin und $NH_2$-$(CH_2)_3$-NH-$(CH_2)_2$-$(CH_2)_3$-$NH_2$ mit 4-N-butyl-2,2,6,6-tetramethylpi peridi n}

Von diesen Klassen sind die Klassen e) und f) besonders geeignet, insbesondere solche Tetraalkylpiperidinverbindungen, die s-Triazin-Gruppen enthalten. Weiterhin sind besonders geeignet die Verbindungen 74, 76, 84, 87, 92, 95 und 96.

Die Herstellung der N-Piperidinyl-triazine ist aus der Literatur bekannt (Vgl. z.B. Houben-Weyl "Methoden der organischen Chemie" Bd. VIII, S. 233-237, 3. Aufl., Thieme Verlag Stuttgart 1971). Als Ausgangsmaterial für die Umsetzung mit verschiedenen N-Piperidyl-Aminen können Cyanurchlorid, Diamino-chlor-1,3,5-Triazin oder verschieden substituierte Bisdialkylamino-chlor-1,3,5-triazine oder Dialkylamino bzw. Alkylamino-dichlor-1,3,5-triazine eingesetzt werden.

Technisch bedeutsame Beispiele sind von Tetra- und Pentaalkylpiperidinverbindungen sind: Bis-(2,2,6,6-tetramethylpiperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzylmalonsäure-bis(1,2,2,6,6-pentamethylpiperidyl)ester, Kondensationsprodukt aus 1-Hydroxyethyl-2,2,6,6-tetramethyl-4-hydroxy-piperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.

Anstelle eines einzelnen sterisch gehinderten Amins kann im Rahmen der vorliegenden Erfindung auch ein Gemich verschiedener stersich gehinderter Amine verwandt werden.

Die Menge des Zusatzes des sterisch gehindeten Amins richtet sich nach dem gewünschten Grad der Stabilisierung. Im allgemeinen setzt man 0,01 bis 0,5 Gew.%, insbesondere 0,05 bis 0,5 Gew.%, bezogen auf das Polymer, zu.

Hydrotalcite und (Erd-)Alkalialumosilikate (Zeolithe),

Die chemische Zusammensetzung dieser Verbindungen ist dem Fachmann bekannt, z.B aus den Patentschriften DE 3843581, US 4000100, EP 062813, WO 93/20135.

Verbindungen aus der Reihe der Hydrotalcite können durch die allgemeine Formel VII,

$$M^{2+}1\text{-}x\ M^{3+}x(OH)_2\ (A^{b-})_x/b \bullet d\ H_2O \qquad (VII)$$

beschrieben werden,
wobei
$M^{2+}$ = eines oder mehrere der Metalle aus der Gruppe Mg, Ca, Sr, Zn oder Sn ist,
$M^{3+}$ = Al, oder B ist,
$A^n$ ein Anion mit der Valenz n darstellt,
b eine Zahl von 1-2 ist,
0 <x £ 0,5 ist,
m eine Zahl von 0-20 ist.
Bevorzugt ist
An = $OH^-$, $ClO_4^-$, $HCO_3^-$, $CH_3COO^-$, $C_6H_5COO^-$, $CO_3^{2-}$, ,$(CHOHCOO)_2^{2-}$, $(CH_2COO)_2^{2-}$, $CH_3CHOHCOO^-$, $HPO_3^-$oder $HPO_4^{2-}$ darstellt;

Beispiele für Hydrotalcite sind

$Al_2O_3.6MgO.CO_2.12H_2O$ (i), $Mg_{4,5}Al_2(OH)_{13}.CO_3.3{,}5H_2O$ (ii), $4MgO.Al_2O_3.CO_2.9H_2O$ (iii), $4MgO.Al_2O_3.CO_2.6H_2O$. $ZnO.3MgO.Al_2O_3.CO_2.8\text{-}9H_2O$ und $ZnO.3MgO.Al_2O_3.CO_2.5\text{-}6H_2O$. Ganz besonders bevorzugt sind die Typen i, ii und iii.

Zeolithe (Alkali bzw. Erdalkalialumosilikate)
Sie können durch die allgemeine Formel (VIII)

$$M_{x/n}[(AlO_2)_x(SiO_2)_y].wH_2O \qquad (VIII)$$

beschrieben werden,
worin n die Ladung des Kations M;
M ein Element der ersten oder zweiten Hauptgruppe, wie Li, Na, K, Mg, Ca, Sr
oder Ba;
y:x eine Zahl von 0,8 bis 15, bevorzugt von 0,8 bis 1,2; und
w eine Zahl von 0 bis 300, bevorzugt von 0,5 bis 30, ist.

Beispiele für Zeolithe sind Natriumalumosilikate der Formeln $Na_{12}Al_{12}Si_{12}O_{48}.27\ H_2O$ [Zeolith A], $Na_6Al_6Si_6O_{24}.2\ NaX.\ 7{,}5\ H_2O$, X= OH, Halogen, $ClO_4$ [Sodalith]; $Na_6Al_6Si_{30}O_{72}.24\ H_2O$; $Na_8Al_8Si_{40}O_{96}.\ 2^4\ H_2O$; $Na_{16}Al_{16}Si_{24}O_{80}.$ 16 H20; $Na_{16}Al_{16}Si_{32}O_{96}.16\ H_2O$; $Na_{56}Al_{56}Si_{136}O_{384}.250\ H_2O$ [Zeolith y], $Na_{86}Al_{86}Si_{106}O_{384}.264\ H_2O$ [Zeolith X];
oder die durch teilweisen bzw. vollständigen Austausch der Na-Atome durch Li-, K-, Mg-, Ca-, Sr- oder Zn-Atome darstellbaren Zeolithe wie
$(Na,K)_{10}Al_{10}Si_{22}O_{64}.\ 20\ H_2O$ ; $Ca_{4,5}Na_3[(AlO_2)_{12}(SiO_2)_{12}].\ 30\ H_2O$; $K_9Na_3[(AlO_2)_{12}(SiO_2)_{12}].\ 27\ H_2O$,

Bevorzugte Zeolithe entsprechen den Formeln
$Na_{12}Al_{12}Si_{12}O_{48}\ .\ 27\ H_2O$ [Zeolith A], $Na_6Al_6Si_6O_{24}.2NaX.\ 7{,}5\ H_2O$, X = OH, Cl, $ClO_4$, $1/2CO_3$

[Sodalith]

$$Na_6Al_6Si_{30}O_{72}.24\ H_2O,$$

$$Na_8Al_8Si_{40}O_{96}\ .\ 24\ H_2O,$$

$$Na_{16}Al_{16}Si_{24}O_{80}.\ 16\ H_2O,$$

$$Na_{16}Al_{16}Si_{32}O_{96} . 16 H_2O,$$

$$Na_{56}Al_{56}Si_{136}O_{384}. 250 H_2O,$$ [Zeolith Y]

$$Na_{86}Al_{86}Si_{106}O_{384} . 264 H_2O$$ [Zeolith X]

und solche X- und Y-Zeolithe mit einem Al/ Si-Verhältnis von ca. 1:1. oder die durch teilweisen bzw. vollständigen Austausch der Na-Atome durch Li-, K-, Mg-, Ca-, Sr-, Ba- oder Zn-Atome darstellbaren Zeolithe wie

$$(Na,K)_{10}Al_{10}Si_{22}O_{64}. 20 H_2O.$$

$$Ca_{4,5}Na_3[(AlO_2)_{12}(SiO_2)_{12}]. 30 H_2O$$

$$K_9Na_3[(AlO_2)_{12}(SiO_2)_{12}].27 H_2O$$

Die angeführten Zeolithe können auch wasserärmer bzw. wasserfrei sein. Weitere geeigente Zeolithe sind:
$Na_2O{\cdot}Al_2O_3{\cdot}$(2 bis 5) $SiO_2{\cdot}$(3,5 bis 10) $H_2O$ [Zeolith P]
$Na_2O{\cdot}Al_2O_3{\cdot}2\ SiO_2{\cdot}(3.5\text{-}10)H_2O$ (Zeolith MAP)
oder die durch teilweisen bzw. vollständigen Austausch der Na-Atome durch Li-, K- oder H-Atome darstellbaren Zeolithe wie $(Li,Na,K,H)_{10}Al_{10}Si_{22}O_{64}. 20 H_2O$.

$$K_9Na_3[(AlO_2)_{12}(SiO_2)_{12}]. 27 H_2O$$

$$K_4Al_4Si_4O_{16}{\cdot}6H_2O$$ [Zeolith K-F]

$Na_8Al_8Si_{40}O_{96}.24 H_2O$ Zeolith D, wie in Barrer et al.. J. Chem. Soc. 1952, 1561-71, und in US 2,950,952 beschrieben;
Ferner kommen folgende Zeolithe in Frage:
K-Offretit, wie in EP-A-400,961 beschrieben;
Zeolith R, wie in GB 841,812 beschrieben;
Zeolith LZ-217, wie in US 4,503,023 beschrieben;
Ca-freier Zeolith LZ-218, wie in US 4,333,859 beschrieben;
Zeolith T, Zeolith LZ-220, wie in US 4,503,023 beschrieben; $Na_3K_6Al_9Si_{27}O_{72}.21 H_2O$ [Zeolith L];
Zeolith LZ-211, wie in US 4,503,023 beschrieben;
Zeolith LZ-212, wie in US 4,503,023 beschrieben;
Zeolith O, Zeolith LZ-217 , wie in US 4,503,023 beschrieben;
Zeolith LZ-219, wie in US 4,503,023 beschrieben;
Zeolith Rho, Zeolith LZ-214, wie in US 4,503,023 beschrieben; Zeolith ZK-19, wie in Am. Mineral. 54 1607 (1969) beschrieben; Zeolith W (K-M), wie in Barrer et al. J. Chem. Soc. 1956, 2882, beschrieben;
$Na_{30}Al_{30}Si_{66}O_{192}. 98 H_2O$ [Zeolith ZK-5, Zeolith Q] Besonders bevorzugt werden Zeolith P-Typen der Formel I verwandt, worin x 2 bis 5 und y 3.5 bis 10 sind, ganz besonders bevorzugt Zeolith MAP der Formel I, worin x 2 und y 3.5 bis 10 sind. Insbesondere handelt es sich um Zeolith Na-P, d.h. M steht für Na. Dieser Zeolith tritt im allgemeinen in den Varianten Na-P-1, NaP-2 und Na-P-3 auf, die sich durch ihre kubische, tetragonale oder orthorhombische Struktur unterscheiden (R.M.Barrer, B.M.Munday, J.Chem.Soc. A 1971, 2909-14). In der ebengenannten Literatur ist auch die Herstellung von Zeolith P-1 und P-2 beschrieben. Zeolith P-3 ist danach sehr selten und daher kaum von praktischem Interesse. Die Struktur des Zeolithen P-1 entspricht der aus dem obengenannten Atlas of Zeolite Structures bekannten Gismonditstruktur. In neuerer Literatur (EP-A-384 070) wird zwischen kubischem (Zeolith B oder $P_c$) und tetragonalem (Zeolith $P_1$) Zeolithen vom P-Typ unterschieden. Dort werden auch neuere Zeolithen des P-Typs mit Si:Al Verhältnissen unter 1,07:1 genannt. Hierbei handelt es sich um Zeolithe mit der Bezeichnung MAP oder MA-P für "Maximum Aluminium P". Je nach Herstellungsverfahren kann Zeolith P geringe Anteile anderer Zeolithe enthalten. Sehr reiner Zeolith P ist in WO 94/26662 beschrieben worden.
Im Rahmen der Erfindung lassen sich auch solche feinteiligen, wasserunlöslichen Natriumalumosilikate verwenden, die in Gegenwart von wasserlöslichen anorganischen oder organischen Dispergiermitteln gefällt und kristallisiert wurden. Diese können in beliebiger Weise vor oder während der Fällung bzw. Kristallisation in das Reaktionsgemisch eingebracht werden.
Ganz besonders bevorzugt sind Na-Zeolith A und Na-Zeolith P.

Die Hydrotalcite und/oder Zeolithe können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymer angewandt werden.

Alkalialumocarbonate (Dawsonite).

Das sind Verbindungen der Formel $\{(M_2O)m.(Al_2O_3)_n.Z_0.pH_2O\}$ ,
worin M H, Li, Na, K, $Mg_{1/2}$, $Ca_{1/2}$, $Sr_{1/2}$ oder $Zn_{1/2}$; Z $CO_2$, $SO_2$, $(Cl_2O_7)_{1/2}$, $B_4O_6$, $S_2O_2$ (Thiosulfat) oder $C_2O_2$ (Oxalat); m, wenn M $Mg_{1/2}$ oder $Ca_{1/2}$ ist, eine Zahl zwischen 1 und 2, in allen anderen Fällen eine Zahl zwischen 1 und 3; n eine Zahl zwischen 1 und 4; o eine Zahl zwischen 2 und 4; und p eine Zahl zwischen 0 und 30 ist;

Die erfindungsgemäß verwendbaren Alumosalz-Verbindungen der Formel (I) können natürlich vorkommende Mineralien sein oder synthetisch hergestellte Verbindungen. Die Metalle können partiell gegeneinander ausgetauscht sein. Die genannten Alumosalz—Verbindungen sind kristallin, teilkristallin oder amorph oder können als getrocknetes Gel vorliegen. Die Alumosalzverbindungen können auch in selteneren, kristallinen Modifikationen vorliegen. Ein Verfahren zur Herstellung solcher Verbindungen ist in EP 394670 angegeben. Beispiele für natürlich vorkommende Alumosalz-Verbindungen sind Indigirit, Tunisit, Alumohydrocalcit, Para-Alumohydrocalcit, Strontiodresserit und Hydro-Strontiodresserit. Weitere Beispiele für Alumosalz-Verbindungen sind Kaliumalumocarbonat $\{(K_2O).(Al_2O_3).(CO_2)_2.2H_2O\}$, Natriumalumothiosulfat $((Na_2O).(Al_2O_3):(S_2O_2)_2.2H_2O\}$, Kaliumalumosulfit $\{(K_2O).(Al_2O_3).(SO_2)_2.2H_2O\}$, Calciumalumooxalat $\{(CaO).(Al_2O_3).(C_2O_2)_2.5H_2O\}$, Magnesiumalumotetraborat $\{(MgO).(Al_2O_3).(B_4O_6)_2.5H_2O\}$, $\{([Mg_{0,2}Na_{0,6}]_2O).(Al_2O_3).(CO_2)_2.4,1H_2O\}$, $\{([Mg_{0,2}Na_{0,6}]_2O).(Al_2O_3).(CO_2)_2.4,3H_2O\}$ und $\{([Mg_{0,3}Na_{0,4}]_2O).(Al_2O_3).(CO_2)_{2,2}.4,9H_2O\}$.

Die gemischten Alumosalz-Verbindungen können nach an sich bekannten Verfahren durch Kationenaustausch, bevorzugt aus den Alkali-Alumosalz-Verbindungen oder durch Kombinationsfällung (siehe beispielsweise US 5,055,284) erhalten werden.

Bevorzugt sind Alumosalz-Verbindungen der obigen Formel,
worin M Na oder K; Z $CO_2$, $SO_2$ oder $(Cl_2O_7)_{1/2}$; m 1-3; n 1-4; o 2-4 und p 0-20 bedeuten. Besonders bevorzugt bedeutet Z $CO_2$.

Weiter sind Verbindungen bevorzugt, welche sich durch folgende Formeln darstellen lassen:

$$M_2O.Al_2O_3.(CO_2)_2.pH_2O \quad (Ia)$$

$$(M_2O)_2.(Al_2O_3)_2.(CO_2)_2.pH_2O \quad (Ib)$$

$$M_2O.(Al_2O_3)_2.(CO_2)_2.\ pH_2O \quad (Ic)$$

wobei M ein Metall wie Na, K, $Mg_{1/2}$, $Ca_{1/2}$, $Sr_{1/2}$ oder $Zn_{1/2}$ und p eine Zahl zwischen 0 und 12 bedeutet.

Besonders bevorzugt ist Natriumalumodihydroxycarbonat (DASC) und die homologe Kaliumverbindung (DAPC).

Anstelle von Dawsoniten können auch Lithium-alumohydroxycarbonate bzw. Lithium-Magnesium-alumo-hydroxycarbonate, wie in EP 549.340 bzw. DE 4.425.266 beschrieben, Verwendung finden.

Die Dawsonite können in Mengen von beispielsweise 0,01 bis 5, zweckmäßig 0,1 bis 3, besonders bevorzugt 0,1 bis 2 Gew.-Teilen, bezogen auf 100 Gew.-Teile halogenhaltiges Polymer angewandt werden.

Bevorzugt enthält die Stabilisatorkombination die Komponente A) und als Komponente B) mindestens einen Stoff aus den Gruppen der Perchlorat-Verbindungen,

Glycidylverbindungen, oder der Dihydropyridine und Polydihydropyridine.

Die erfindungsgemäße Stabilisatorkombination kann zusammen mit weiteren Zusätzen verwandt werden, die für die Verarbeitung und Stabilisierung chlorhaltiger Polymere üblich sind, wie z.B.:

Zinkverbindungen

Bei den organischen Zinkverbindungen mit einer Zn-O-Bindung handelt es sich um Zinkenolate oder/und Zinkcarboxylate. Letztere sind z.B. Verbindungen aus der Reihe der aliphatischen gesättigten $C_2$-$C_{22}$-Carboxylate, der aliphatischen ungesättigten $C_3$-$C_{22}$-Carboxylate, der aliphatischen $C_2$-$C_{22}$-Carboxylate, die mit wenigstens einer OH-Gruppe substituiert sind oder deren Kette wenigstens durch ein O-Atom unterbrochen ist (Oxasäuren), der cyclischen und bicyclischen Carboxylate mit 5-22 C-Atomen, der unsubstituierten, mit wenigstens einer OH-Gruppe substituierten und/oder $C_1$-$C_{16}$-alkylsubstituierten Phenylcarboxylate, der Phenyl-$C_1$-$C_{16}$-alkylcarboxylate, oder der gegebenenfalls mit $C_1$-$C_{12}$-Alkyl substituierten Phenolate, oder der Abietinsäure.

Namentlich zu erwähnen sind, als Beispiele, die Zinksalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptänsäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; Zinksalze der divalenten Carbonsäuren bzw. deren Monoester, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, 3,6,9-Trioxadecan-1,10-dicarbonsäure, Milchsäure, Malonsäure, Maleinsäure, Weinsäure, Zimtsäure, Mandelsäure, Äpfelsäure, Glykolsäure, Oxalsäure, Salicylsäure, Polyglykol-dicarbonsäure (n=10-12), Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure sowie ferner sog. überbasische (overbased) Zinkcarboxylate.

Bei den Zink-Enolaten handelt es sich bevorzugt um Enolate des Acetylacetons, des Benzoylacetons, des Dibenzoylmethans sowie um Enolate der Acetessig- und Benzoylessigester sowie der Dehydroacetsäure. Auberdem können auch anorganische Zinkverbindungen wie Zinkoxid, Zinkhydroxid, Zinksulfid oder Zinkcarbonat zum Einsatz kommen.

Bevorzugt sind Zinkcarboxylate einer Carbonsäure mit 7 bis 25 C-Atomen (Zinkseifen), wie beispielsweise Benzoate oder Alkanoate, bevorzugt $C_8$-Alkanoate, Stearat, Oleat, Laurat, Palmitat, Behenat, Versatat,

Hydroxystearate, Dihydroxystearate, p-tert-Butylbenzoat, oder (Iso)octanoat. Besonders bevorzugt sind Stearat, Oleat, Versatat, Benzoat, p-tert-Butylbenzoat und 2-Ethylhexanoat.

Außer den genannten Zink-Verbindungen kommen auch organische Aluminium-, Cer- oder Lanthanverbindungen in Frage, die eine Metall-O-Bindung aufweisen. Zu den verwendbaren und bevorzugten Aluminium-Verbindungen gehören Carboxylate und Enolate.

Die beschriebenen Metallseifen bzw. deren Mischungen können in Mengen von beispielsweise 0,001 bis 10, zweckmäßig 0,01 bis 5, bevorzugt 0,01 bis 3 Gew.-Teilen, bezogen auf 100 Gew.-Teile chlorhaltiges Polymer, angewandt werden.

Die Stabilisatorkombination kann mit weiteren Stabilisierungs-, Hilfs- und Verarbeitungsmitteln ausgestattet werden, wie z.B. Alkali- und Erdalkaliverbindungen. Gleitmitteln, Weichmachern, Pigmenten, Füllstoffen, Phosphiten, Thiophosphiten und Thiophosphaten, Mercapto-carbonsäure-estern, epoxidierten Fettsäureestern, Antioxidantien, UV-Absorbern und Lichtschutzmitteln, optischen Aufhellern, Schlagzähmodifikatoren und Verarbeitungshilfen, Geliermitteln, Antistatika, Biociden, Metalldesaktivatoren, Flammschutz- und Treibmitteln, sowie Antifogging-agents (Vgl. dazu "Handbook of PVC-Formulating" von E. J. Wickson, John Wiley & Sons, New York 1993).

Nicht beschränkend seien hier einige der bekannten Zusätze und Verarbeitungshilfsmittel genannt:

Alkali und Erdalkali-Verbindungen:

Darunter versteht man vornehmlich die Carboxylate der oben beschriebenen Säuren, aber auch entsprechende Oxide bzw. Hydroxide oder (Hydrogen) carbonate. Es kommen auch deren Gemische mit organischen Säuren in Frage. Beispiele sind NaOH, Na-stearat, Na-bicarbonat, KOH, K-stearat, K-bicarbonat, LiOH, $Li_2CO_3$, Li-stearat, CaO, $Ca(OH_2)$, MgO, $Mg(OH)_2$, Mg-stearat, $CaCO_3$, $MgCO_3$ und Dolomit, Huntit, Kreide, bas. Mg-carbonat sowie andere fettsaure Na- und K-Salze.

Bei Erdalkali- und Zn-Carboxylaten können auch deren Addukte mit MO oder $M(OH)_2$ (M = Ca, Mg, Sr oder Zn), sogenannte "overbased" Verbindungen, zum Einsatz kommen.

Bevorzugt werden zusätzlich zur erfindungsgemäßen Stabilisatorkombination Alkali-, Erdalkali- und/oder Aluminumcarboxylate eingesetzt.
Weitere Metallstabilisatoren: Hier sind vor allem die Organozinnstabilisatoren zu nennen. Insbesondere kann es sich um Carboxylate, Mercaptide und Sulfide handeln. Beispiele geeigneter Verbindungen sind in US 4,743,640 beschrieben.

*Gleitmittel*

Als Gleitmittel kommen beispielsweise in Betracht:
Montanwachs, Fettsäureester, PE-Wachse, Amidwachse, Chlorparaffine, Glycerinester oder Erdalkaliseifen. Verwendbare Gleitmittel sind auch in "Kunststoffadditive", R. Gächter/ H. Müller, Carl Hanser Verlag, 3.Aufl.,1989, Seiten 478-488 beschrieben. Zu erwähnen sind ferner Fettketone (wie in DE 4204887 beschrieben) sowie Gleitmittel auf Silikonbasis (wie in EP 225261 beschrieben) oder Kombinationen davon, wie in EP 259783 aufgeführt.

*Weichmacher*

Als organische Weichmacher kommen beispielsweise solche aus den folgenden Gruppen in Betracht:

A) Phthalsäureester:

Beispiele für solche Weichmacher sind Dimethyl-, Diethyl-, Dibutyl-, Dihexyl, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie $C_7$-$C_9$- und $C_9$-$C_{11}$-Alkylphthalate aus überwiegend linearen Alkoholen, $C_6$-$C_{10}$-n-Alkylphthalate und $C_8$-$C_{10}$-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt sind Di-2-ethylhexyl-, Di-iso-nonyl- und Di-iso-decylphthalat, die auch unter den gebräuchlichen Abkürzungen DOP (Dioctylphthalat, Di-2-ethylhexyl-phthalat), DINP (Diisononylphthalat), DIDP (Diisodecylphthalat) bekannt sind.

B) Ester aliphatischer Dicarbonsäuren, insbesondere Ester von Adipin-, Azelainund Sebazinsäure

Beispiele für solche Weichmacher sind Di-2-ethylhexyladipat, Diisooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.

C) Trimellithsäureester,

beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-$C_6$-$C_8$-alkyl, Tri-$C_6$-$C_{10}$-alkyl-, Tri-$C_7$-$C_9$-alkyl- und Tri-$C_9$-$C_{11}$alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen. Gebräuchliche Abkürzungen sind TOTM (Trioctyltrimellitat, Tri-2-ethylhexyltrimellitat), TIDTM (Triisodecyltrimellitat) und TITDTM (Triisotridecyltrimellitat).

D) Epoxyweichmacher

In der Hauptsache sind das epoxidierte ungesättigte Fettsäuren wie z.B. epoxidiertes Sojabohnenöl.

E) Polymerweichmacher

Eine Definition dieser Weichmacher und Beispiele für solche sind in "Kunststoffadditive", R. Gächter/H. Müller, Carl Hanser Verlag, 3.Aufl., 1989, Kapitel 5.9.6, Seiten 412-415, sowie in "PVC Technology", W.V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol.

F) Phosphorsäureester

Eine Definition dieser Ester ist im vorstehend genannten "Taschenbuch der Kunststoffadditive" Kapitel 5.9.5, S. 408-412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-diphenylphosphat, Kresyldiphenylphosphat, Triphenylphosphat, Trikresylphosphat und Trixylenylphosphat. Bevorzugt sind Tri-2-ethylhexylphosphat

sowie /Reofos 50 und 95 (Ciba-Geigy).

G) Chlorierte Kohlenwasserstoffe (Paraffine)
H) Kohlenwasserstoffe
I) Monoester, z.B. Butyloleat, Phenoxyethyloleat, Tetrahydrofurfuryloleat und Alkylsulfonsäureester.
J) Glykolester, z.B. Diglykolbenzoate.

Definitionen und Beispiele für Weichmacher der Gruppen G) bis J) sind den folgenden Handbüchern zu entnehmen:

"Kunststoffadditive", R. Gächter/H. Müller, Carl Hanser Verlag, 3.Aufl., 1989, Kapitel 5.9.14.2, S.422-425, (Gruppe G)), und Kapitel 5.9.14.1, S.422, (Gruppe H).

"PVC Technology", W.V. Titow, 4th. Ed., Elsevier Publishers, 1984, Kapitel 6.10.2, Seiten 171-173, (Gruppe G), Kapitel 6.10.5 Seite 174, (Gruppe H), Kapitel 6.10.3, Seite 173, (Gruppe I) und Kapitel 6.10.4, Seiten 173-174 (Gruppe J).

Es können auch Mischungen unterschiedlicher Weichmacher verwandt werden. Die Weichmacher können in einer Menge von beispielsweise 5 bis 120, zweckmäßig 10 bis 100 und insbesondere 20 bis 70 Gew.-Teilen, bezogen auf 100 Gew.-Teile PVC, angewandt werden.

Pigmente

Geeignete Stoffe sind dem Fachmann bekannt. Beispiele für anorganische Pigmente sind $TiO_2$, Ruß, $Fe_2O_3$, $Sb_2O_3$, $(Ti,Ba,Sb)O_2$,$Cr_2O_3$, Spinelle wie Cobaltblau und Cobaltgrün, Cd(S,Se), Ultramarinblau. Organische Pigmente sind z.B. Azopigmente, Phthalo-cyaninpigmente, Chinacridonpigmente, Perylenpigmente, Diketo-pyrrolopyrrolpigmente und Anthrachinonpigmente. Bevorzugt ist $TiO_2$ auch in mikronisierter Form.
Definition und weitere Beschreibungen finden sich im "Handbook of PVC Formulating", EJ.Wickson, John Wiley & Sons, New York 1993.

Füllstoffe

Füllstoffe (HANDBOOK OF PVC FORMULATING E.J.Wickson John Wiley & Sons, Inc., 1993 SS.393-449) und Verstärkungsmittel (TASCHENBUCH der KA'e R.Gächter & H.Müller, Carl Hanser, 1990, SS.549-615) (wie beispielsweise Calciumcarbonat, Dolomit, Wollastonit, Magnesiumoxid, Magnesiumhydroxid,

Silikate, Glasfasern, Talk, Kaolin, Kreide, Glimmer, Metalloxide und -hydroxide, Ruß oder Graphit), Bevorzugt ist Kreide.

Phosphite

Beispiele sind Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bisisodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Bis-(2,4-di-tert-butyl--6-methylphenyl)-methylphosphit, Bis-(2,4-di-tert—butyl-6-methylphenyl)-ethylphosphit.
Besonders geeignete sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert-butylphenyl)-didodecylphosphit, (2,6-Di-tert- butylphenyl)-di-dodecylphosphit und die Dialkylund Diaryl-pentaerythrit-diphosphite, wie Distearylpentaerythrit-diphosphit, sowie nichtstöchiometrische Triarylphosphite. z.B. der Zusammensetzung $(H_{19}C_9\text{-}C_6H_4)O_{1,5}P(OC_{12,13}H_{25,27})_{1,5}$.
Bevorzugte organische Phosphite sind Distearyl-pentaerythrit-diphosphit, Trisnonylphenylphosphit und Phenyl-didecyl-phosphit.
Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewandt werden.

Thiophosphite und Thiophosphate

Unter Thiophosphiten bzw.Thiophosphaten sind Verbindungen vom allgemeinen Typ:
$(RS)_3P$, $(RS)_3P{=}O$ bzw. $(RS)_3P{=}S$ zu verstehen, die in den Patentschriften DE 28 09 492,

EP 090.770 und EP 573.394 beschrieben wird.

Beispiele für diese Verbindungen sind: Trithiohexylphosphit, Trithiooctylphosphit, Trithio-laurylphosphit, Trithiobenzylphosphit, Trithiophosphorigesäure-tris-(carbo-i-octyloxy)-methyl-ester. Trithiophosphorigsäure-tris-(carbo-trimethylcyclohexyloxy)-methylester, Trithio-phosphorsäure-S,S,S-tris-(carbo-i-octyloxy)-methylester, Trithiophosphorsäure-S,S,S-tris-(carbo-2-ethylhexyloxy)-methylester, Trithiophosphorsäure-S,S,S-tris-1-(carbo-hexyloxy)-ethylester, Trithiophosphorsäure-5,5,5-tris-1-(carbo-2-ethylhexyloxy)-ethalester, Trithiophosphorsäure-S,S,S-tris-2-(carbo-2-ethylhexyloxy)-ethylester.

Mercaptocarbonsäure-Ester

Beispiele für diese Verbindungen sind: Ester der Thioglycolsäure, Thioäpfelsäure, Mercaptopropionsäure, der Mercaptobenzoesäuren bzw. der Thiomilchsäure die in den Patenten FR 2 459 816, EP 90.748, FR 2 552 440, EP 365.483 beschrieben sind. Die gen. Mercaptocarbonsäure-Ester umfassen auch Polyolester bzw. deren Partialester.

Epoxidierte Fettsäureester

Die erfindungsgemäße Stablisatorkombination kann zusätzlich vorzugsweise mindestens einen epoxidierten Fettsäureester enthalten. Es kommen dafür vor allem Ester von Fettsäuren aus natürlichen Quellen (Fettsäureglyceride), wie Sojaöl oder Rapsöl, in Frage. Es können aber auch synthetische Produkte zum Einsatz kommen, wie epoxidiertes Butyloleat.

Antioxidantien

Als solche kommen beispielsweise in Betracht:

1. Alkylierte Monophenole, z.B. 2,6-Di-tert-butyl-4-methylphenol, 2-tert-butyl-4,6-dimethylphenol, 2,6-Di-tert-butyl-4-ethylphenol, 2,6-Di-tert-butyl-4-nbutylphenol, 2,6-Di-tert-butyl-4-iso-butylphenol, 2,6-Di-cyclopentyl-4-methylphenol, 2-(a-Methylcyclohexyl)-4,6-dimethylphenol 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol, Octylphenol, Nonylphenol,Dodecylphenol und Mischungen davon.
2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
3. Alkylierte Hydrochinone, z.B. 2,6-Di-tert-butyl-4-methoxyphenol, 2,5-Ditert-butyl-hydrochinon, 2,5-Di-tert-amyl-hydrochinon, 2,6-biphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(a-methylcyclohexyl)-phenol], 2,2'-Methylen-bis-(4-methyl-6-cyclohexylphenol), 2,2'-Methylen-bis-(6-nonyl-4-methylphenol); 2,2'--Methylen-bis-(4,6-di-tert-butylphenol), 2,2'-Ethyliden-bis-(4,6-di-tertbutylphenol), 2,2'-Ethyliden-bis-(6-tert-butyl-4-isobutylphenol), 2,2'--Methylen-bis-[6-(a-methylbenzyl)-4-nonytphenol], 2,2'-Methylen-bis-[6-($\alpha$,$\alpha$-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-ndodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien,Bis-[2-(3'-tert-butyl-2'-hydroxy-5'-methyl-benzyl)-6-tert-butyl-4-methyl-phenyl]-terephthalat,1,1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
6. Benzylverbindungen z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzylmercaptoacetat.

7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tertbutyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)- 1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3 dicyclohexyl-4-hydroxybenzyl)-isocyanurat.
10. Phosphonate und Phosphonite, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäuremonoethyleste rs, Tetrakis-(2,4-di-tert-butylphenyl)-4,4'-biphenylendiphosphonit, 6-Isooctyloxy-2,4,8,10-tetra-tert-butyl-12H-dibenz[d,g]--1,3,2-dioxaphosphocin, 6-Fluor-2,4,8,10-tetra-tert-butyl-12-methyl-dibenz[d,g]-1,3,2-dioxaphosphocin.
11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
12. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Dipentaerythrit, Tris-(hydroxyethyl)-isocyanurat, N,N'-Bis--(hydroxyethyl)-oxalsäurediamid, 3-Thiaundecanol, 3-Thiapentadecanol, Trimethylhexandiol, Trimethylolpropan, Di-trimethylolpropan, 4-Hydroxymethyl-1-phospha-2,6,7-trioxabicyclo-[2.2.2]-octan.
13. Ester der β-(5-tert-Butyl-4-hydroxy-3-methylphenyl)-propionsäure mit einoder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris--(hydroxy)ethyl-isocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.
16. Amide der b-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Bevorzugt sind Antioxidantien der Gruppen 1-5, 10 und 12 insbesondere 2,2-Bis-(4-hydroxyphenyl)-propan, Ester der 3,5-Di-tert-butyl-4-hydroxyphenylpropionsäure mit Octanol, Octadecanol oder Pentaerythrit oder Tris-(2,4-di-tert-butylphenyl)-phosphit.

Gegebenenfalls kann auch ein Gemisch von Antioxidantien unterschiedlicher Struktur eingesetzt werden.

Die Antioxidantien können in einer Menge von beispielsweise 0,01 bis 10, zweckmäßig 0,1 bis 10 und insbesondere 0,1 bis 5 Gew.-Teilen, bezogen auf 100 Gew.-Teile PVC, angewandt werden.

*UV-Absorber und Lichtschutzmittel*

Beispiele dafür sind:

1. 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'hydroxyphenyl)-5-chlor-benztriazol, 2-(3'-tert-Butyl-2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Ditert-amyl-2'-hydroxyphenyl)-benztriazol, 2-(3',5'-Bis-(α,α-dimethylbenzyl)-2'-hydroxyphenyl)-benztriazol, Mischung aus 2-(3'-tert-Butyl-2'-hydroxy-5'--(2-octyloxycarbonylethyl)phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlorbenztriazol, 2-(3'-tert-Butyl-2'-hydroxy-5'-(2-methoxycarbonylethyl)-phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl ]-2'-hydroxyphenyl)-benztriazol, 2-(3'-Dodecyl-2'-hydroxy-5'-methylphenyl)-benztriazol, und 2-(3'-tert-Butyl-2'-hydroxy--5'-(2-isooctyloxycarbonylethyl)phenyl-benztriazol, 2,2'-Methylen-bis[4--(1,1,3,3-tetramethylbutyl)-6-benztriazol-2-yl-phenol]; Umesterungsprodukt von 2-[3'-tert—Butyl-5'-(2-methoxycarbonylethyl)-2'-hydroxy-phenyl]-benztriazol mit Polyethylenglycol 300;mit R = 3'-tert-Butyl-4'-hydroxy-5'--2H-benztriazol-2-yl-phenyl.

2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

3. Ester von gegebenenfalls substituierten Benzoesäuren, wie z.B. 4-tert--Butyl—phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

4. Acrylate, wie z.B. a-Cyan-b,b-diphenylacrylsäure-ethylester bzw.-isooctylester, a-Carbomethoxy-zimtsäuremethylester, a-Cyano-b-methyl-pmethoxy-zimtsäuremethylester bzw. -butylester, a-Carbomethoxy-pmethoxy-zimtsäure-methylester, N-(b-Carbomethoxy-b-cyanovinyl)-2-methyl-indolin.

5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-striazin, Tris-(2,2,6,6-tetramethyl- 4-piperidyl)-nitrilotriacetat, Tetrakis--(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis--(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis--(3-aminopropylamino)äthan, Kondensationsprodukt aus 2-Chlor-4,6-di-(4-nbutylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, sowie Chimassorb966.

7. Oxalsäurediamide, wie z.B. 4,4'-Di-octyloxy-oxanilid, 2,2'-Di-octyloxy-5,5'-ditert—butyl—oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2--Ethoxy-5-tert-butyl-2'-ethyloxanilid und dessen Gemisch mit 2-Ethoxy-2'ethyl-5,4'-di-tert-butyl-oxanilid, Gemische von o- und p-Methoxy- sowie von o- und p-Ethoxy-di-substituierten Oxaniliden.

8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

Treibmittel

Treibmittel sind organische Azo- und Hydrazoverbindungen, Tetrazole, Oxazine, Isatosäureanhydrid, sowie Soda und Natriumbicarbonat. Bevorzugt sind Azodicarbonamid und Natriumbicarbonat sowie deren Mischungen.

Definitionen und Beispiel für Schlagzähmodifikatoren und Verarbeitungshilfen, Geliermittel, Antistatika, Biocide, Metalldesaktivatoren, optische Aufheller, Flammschutzmittel sowie Antifogging-agents sind beschrieben in "Kunststoffadditive", R.Gächter/H.Müller, Carl Hanser Verlag, 3.Aufl., 1989, und "Handbook of Polyvinyl Chloride Formulating" EJ.Wilson, J.Wiley & Sons, 1993. Schlagzähmodifikatoren sind ferner ausführlich beschrieben in "Impact Modifiers for PVC", J.T.Lutz/D.L.Dunkelberger, John Wiley & Sons, 1992.

Die Stabilisatorkombination kann nicht nur durch Mischen der Komponenten in dafür geeigneten Apparaturen hergestellt werden, sondern auch, indem ein Teil der zusätzlichen Komponenten vor Zugabe der Komponente A) *in situ* in einer Schmelze von Gleitmitteln und/oder Metallseifen hergestellt werden. Diese Methode eignet sich insbsondere zur *in situ*-Herstellung von Calciumacetylacetonat (vgl. EP 336 289).

Beispiele für die zu stabilisierenden chlorhaltigen Polymere oder deren Recyclate sind: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alphasubstituierten Acrylsäure; Polymere von chlorierten Styrolen, zum Beispiel Dichlorstyrol; chlorierte Polymere des Ethylens; Polymere und nachchlorierte Polymere von Chlorbutadiens und deren Copolymere mit Vinylchlorid; sowie Mischungen der genannten Polymere unter sich oder mit anderen polymerisierbaren Verbindungen.

Ferner sind umfaßt die Pfropfpolymerisate von PVC mit EVA, ABS und MBS. Bevorzugte Substrate sind auch Mischungen der vorstehend genannten Homound Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Im Rahmen dieser Erfindung sind unter PVC auch Copolymerisate oder Pfropfpolymerisate von PVC mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist PVC Homopolymer auch in Kombination mit Polyacrylaten.

Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z.B. Papier, Pigmente, Klebstoffe, die oft schwierig zu entfernen sind. Diese Fremdstoffe können auch aus dem Kontakt mit diversen Stoffen während des Gebrauchs oder der Aufarbeitung stammen, wie z.B. Treibstoffreste, Lackanteile, Metallspuren und Initiatorreste.

Die Erfindung betrifft auch ein Verfahren zur Stabilisierung chlorhaltiger Polymere, dadurch gekennzeichnet, daß man diesen eine Stabilisatorkombination gemäß Anspruch 1 zufügt und die Komponenten in dafür geeigneten Apparaturen innig vermischt.

Zweckmäßig kann die Einarbeitung der Stabilisatoren nach folgenden Methoden erfolgen:

- als Emulsion oder Dispersion (Eine Möglichkeit ist z.B. die Form einer pastösen Mischung. Ein Vorteil der erfindungsgemäßen Kombination besteht bei dieser Darreichungsform in der Stabilität der Paste.);
- Als Trockenmischung während des Vermischens von Zusatzkomponenten oder Polymer mischungen;
- durch direktes Zugeben in die Verarbeitungsapparatur (z.B. Kalander, Mischer, Kneter, Extruder und dergleichen) oder
- als Lösung oder Schmelze.

Das erfindungsgemäß stabilisierte PVC, das die Erfindung ebenfalls betrifft, kann auf an sich bekannte Weise hergestellt werden, wozu man unter Verwendung an sich bekannter Vorrichtungen wie der oben genannten Verarbeitungsapparaturen die erfindungsgemäße Stabilisatorkombination und gegebenenfalls weitere Zusätze mit dem PVC vermischt. Hierbei können die Stabilisatoren einzeln oder in Mischung zugegeben werden oder auch in Form sogenannter Masterbatches.

Die Erfindung betrifft somit auch ein Verfahren zur Herstellung von stabilisiertem PVC, dadurch gekennzeichnet, daß man unter Verwendung von Vorrichtungen, wie Kalandern, Mischern, Knetern, Extrudern und dergleichen, die vorstehend beschriebenen Komponenten (b) © und (d) und gegegbenenfalls weitere Zusätze mit dem PVC vermischt.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen, Sintern oder Spinnen, ferner Extrusions-Blasen oder eine Verarbeitung nach dem Plastisol-Verfahren. Das stabilisierte PVC kann auch zu Schaumstoffen verarbeitet werden. Setzt man als Treibmittel Azodicarbonamid ein, ist es vorteilhaft, wenn keine 1,3-Diketone zusätzlich verwendet werden.

Das erfindungsgemäß stabilisierte PVC eignet sich z.B. für Halbhart- und Weich-Rezepturen, insbesondere in Form von Weichrezepturen für Drahtummantelungen, Crash pad-Folien (Automobile), Kabelisolierungen, welche besonders bevorzugt ist. In Form von Halbhart-Rezepturen eignet sich das erfindungsgemäße PVC besonders für Dekorationsfolien, Schaumstoffe, Agrarfolien, Schläuche, Dichtungsprofile und Bürofolien.

In Form von Hart-Rezepturen eignet sich das erfindungsgemäß stabilisierte PVC besonders für Hohlkörper (Flaschen), Verpackungsfolien (Tiefziehfolien),

Blasfolien, Rohre, Schaumstoffe, Schwerprofile (Fensterrahmen), Lichtwandprofile, Bauprofile, Sidings, Fittings, Bürofolien und Apparatur-Gehäuse (Computer, Haushalteräte).

Beispiele für die Anwendung des erfindungsgemäßen PVC als Plastisol sind Kunstleder, Bodenbeläge, Textilbeschichtungen, Tapeten, Coil-Coatings und Unterbodenschutz für Kraftfahrzeuge.

Beispiele für Sinter-PVC-Anwendungen des erfindungsgemäß stabilisierten PVC sind Slush, Slush Mould und Coil-Coatings.

Bevorzugt sind PVC-Hartschaumstoff-Formkörper und PVC-Rohre wie für Trinkoder Abwasser, Druckrohre, Gasrohre, Kabelkanal- und Kabelschutzrohre, Rohre für Industrieleitungen, Sickerrohre, Abflußrohre, Dachrinnenrohre und Drainagerohre. Näheres hierzu siehe "Kunststoffhandbuch PVC", Band 2/2, W.Becker/H.Braun, 2.Aufl., 1985, Carl Hanser Verlag, Seite 1236-1277.

Die folgenden Beispiele erläutern die Erfindung weiter, ohne sie jedoch zu beschränken. Teile- und Prozentangaben beziehen sich - wie auch in der übrigen Beschreibung - sofern nicht anders angegeben, auf das Gewicht.

*Beispiel 1: Statischer Hitzetest*

Die Mischungen gemäß den folgenden Tabellen werden jeweils 5 Minuten bei 190°C bzw. 170°C auf einem Mischwalzwerk plastifiziert. Aus den so erhaltenen Folien (Stärke 0.3 mm) werden Prüfstreifen geschnitten und in einem Mathis-Thermo-Takter bei 190°C über den in den nachstehenden Tabellen angegebenen Zeitraum thermisch belastet. Anschließend wird der Yellowness Index (YI) nach ASTM-1925-70 bestimmt.

Je niedriger der gefundene YI-Wert ist, desto wirksamer verhindert das Stabilisatorsystem die Vergilbung und damit die Schädigung des Materials. Die Langzeitthermostabilität des stabilisierten Polymeren ist auch aus dem plötzlichen Einsetzen einer massiven Verfärbung zu erkennen.

Ein Stabilisator ist um so wirksamer, je länger diese Verfärbung unter thermischer Belastung verzögert wird, oder je niedriger die Anfangsverfärbung und je besser die Farbhaltung (geringe Mittelverfärbung) ist.

Tabelle I:

| Statischer Hitzetest bei 190°C (5 min. bei 190°C gewalzt) | | | |
|---|---|---|---|
| Mischung | I1 | I2 | I3 |
| Solvic 268 RC (S-PVC K-Wert 68) | 100 | 100 | 100 |
| Omyalite 30 T1) | 3,0 | 3,0 | 3,0 |
| Ca-Stearat | 0,6 | 0,6 | 0,6 |
| Hostalub H42) | 1,0 | 1,0 | 1,0 |
| Hostalub H122a) | 0,2 | 0,2 | 0,2 |
| CH 3003) | 0,4 | 0,4 | 0,4 |
| Mark 6045 ACM4) | 0,3 | / | / |
| stabilisatorse5) | 0,2 | 0,2 | 0,2 |
| $NaClO_4$ | / | / | 0,05 |
| | YI | YI | YI |

Tabelle I: (fortgesetzt)

| Statischer Hitzetest bei 190°C (5 min. bei 190°C gewalzt) | | | |
|---|---|---|---|
| Minuten | | | |
| 10 | 20.7 | 29.9 | 22.2 |
| 15 | 28.4 | 66.6 | 29.1 |
| 20 | 40.2 | 108.4 | 39.2 |
| 1)Kreide 2)Gleitmittel ex Fa. Hoechst (Paraffinwachs) 2a)Gleitmittel ex Fa. Hoechst (polares Ethylenwachs) 3)Phenylisodecylphosphit 4) Gemisch aus 9% $NaClO_4$, 45% $CaCO_3$ 40% $CaSiO_3$, 6% $H_2O$ 5)6-Amino-1,3-dimethyl-uracil | | | |

Es zeigt sich, daß die Verwendung von geringen Mengen Perchlorat-Verbindung als Komponente B in den erfindungsgemäßen Mischungen I1 und I3 wesentlich besser stabilisieren als ohne Komponente B.

Tabelle II:

| Statischer Hitzetest bei 190°C (5 min. bei 170°C gewalzt) | | | | | | | | | |
|---|---|---|---|---|---|---|---|---|---|
| Mischung | II1 | II2 | II3 | II4 | II5 | II6 | II7 | II8 | II9 |
| Evipol SH 6030 (PVC K-Wert 60) | 100 | 100 | 100 | 100 | 100 | 100 | 100 | 100 | 100 |
| CH 300 3) | 0,8 | 0,8 | 0,8 | 0,8 | 0,8 | 0,8 | 0,8 | 0,8 | 0,8 |
| Wachs E 6) | 0,4 | 0,4 | 0,4 | 0.4 | 0.4 | 0,4 | 0,4 | 0,4 | 0,4 |
| epox. Soja-Öl | 5,0 | 5,0 | 5,0 | / | / | / | / | / | / |
| Araldit GY 250 7) | / | / | / | 5,0 | 5,0 | 5,0 | / | / | / |
| Araldit PT 810 8) | / | / | / | / | / | / | 5,0 | 5,0 | 5,0 |
| Stabilisator 1 5) | 1,0 | / | / | 1,0 | / | / | / | / | 1,0 |
| Stabilisator 2 9) | / | 1,0 | / | / | 1,0 | / | / | 1,0 | / |
| Stabilisator 3 10) | / | / | 1,0 | / | / | 1,0 | / | / | 1,0 |
| | YI | YI | YI | YI | YI | YI | YI | YI | YI |
| Minuten | | | | | | | | | |
| 20 | 17.4 | 17.3 | 15.6 | 13.4 | 11.8 | 12.5 | 14.8 | 16.2 | 17.1 |
| 25 | 23.2 | 33.7 | 29.5 | 17.8 | 18.5 | 17.7 | 21.2 | 24.4 | 24.0 |
| 30 | 33.6 | 54.9 | 46.3 | 23.5 | 29.9 | 27.8 | 27.2 | 33.6 | 30.8 |
| 3)Phenylisodecylphosphit 6)Esterwachs (Basis: Montansäure) 7)Bisphenol-A-diglycidylether (flüssiges Epoxid) 8) festes heterocyclisches Epoxidharz (Triglycidylisocyanurat) 9)6-Amino-1,3-di-n-butyluracil 10)6-Amino-1,3-diethylthiouracil | | | | | | | | | |

Es zeigt sich, daß die erfindungsgemäße Stabilisisatorkombination (II4 bis II9) aus Glycidyl- und Amino-Uracilverbindung überlegen ist.

Tabelle III

| Statischer Hitzetest bei 190°C (5 min. bei 170°C gewalzt) | | | | | | | | | |
|---|---|---|---|---|---|---|---|---|---|
| Mischung | III1 | III2 | III3 | III4 | III5 | III6 | III7 | III8 | III9 |
| Evipol SH 6030 (PVC K-Wert 60) | 100 | 100 | 100 | 100 | 100 | 100 | 100 | 100 | 100 |
| CH 300[3)] | 0,8 | 0,8 | 0,8 | 0,8 | 0,8 | 0,8 | 0,8 | 0,8 | 0,8 |
| Wachs E[6)] | 0,4 | 0,4 | 0,4 | 0,4 | 0,4 | 0,4 | 0,4 | 0,4 | 0,4 |
| epox. Soja-Öl | 5,0 | 5,0 | 5,0 | 5,0 | 5,0 | 5,0 | 5.0 | 5,0 | 5,0 |
| Rhodiastab 50[11)] | 0,2 | 0,2 | 0,2 | 0,2 | 0,2 | 0,2 | 0,2 | 0,2 | 0,2 |
| Ca-Stearat | 0,3 | 0,3 | 0,3 | 0,3 | 0,3 | 0,3 | 0,3 | 0,3 | 0,3 |
| Zn-Stearat | 0,5 | 0,5 | 0,5 | 0,5 | 0,5 | 0,5 | 0,5 | 0,5 | 0,5 |
| DASC[12)] | / | / | / | 1,0 | 1,0 | 1.0 | / | / | / |
| Alkamizer I[13)] | / | / | / | / | / | / | 1,0 | 1,0 | 1,0 |
| Stabilisator 1[5)] | 1,0 | / | / | 1,0 | / | / | 1,0 | / | / |
| Stabilisator 2[9)] | / | 1,0 | / | / | 1,0 | / | / | 1,0 | / |
| Stabilisator 3[10)] | / | / | 1,0 | / | / | 1,0 | / | / | 1,0 |
| | YI | YI | YI | YI | YI | YI | YI | YI | YI |
| Minuten | | | | | | | | | |
| 20 | 15,2 | 22,7 | 37,4 | 12,9 | 10.6 | 16,1 | 10,0 | 10,2 | 12,4 |
| 25 | 31,4 | 66,9 | | 20,6 | 22,5 | 26,5 | 16,3 | 17,0 | 18,8 |
| 30 | 57,2 | | | 34,0 | 49,1 | 41,8 | 24,1 | 29,7 | 26,5 |
| [11)]Stearoyl-benzoyl-methan ex Fa. RHONE-POULENC [12)]Dihydroxyaluminiumnatriumcarbonat (DASC)[13)]Hydrotalcit ex Fa. KYOWA (Japan) | | | | | | | | | |

Sowohl Zusatz von Dawsonit als auch von Hydrotalcit verbessern die Stabilität.

Tabelle IV:

| Statischer Hitzefest bei 190°C (5 min. bei 170°C gewalzt) | | | | | | | | | | | | |
|---|---|---|---|---|---|---|---|---|---|---|---|---|
| Mischung | IV1 | IV2 | IV3 | IV4 | IV5 | IV6 | IV7 | IV8 | IV9 | IV10 | IV11 | IV12 |
| Evipol SH 6030 (PVC K-Wert 60) | 100 | 100 | 100 | 100 | 100 | 100 | 100 | 100 | 100 | 100 | 100 | 100 |
| CH 300[3)] | 0,8 | 0,8 | 0,8 | 0,8 | 0,8 | 0,8 | 0,8 | 0,8 | 0,8 | 0,8 | 0,8 | 0,8 |
| Wachs E[6)] | 0,4 | 0,4 | 0,4 | 0,4 | 0,4 | 0,4 | 0,4 | 0,4 | 0,4 | 0,4 | 0,4 | 0,4 |
| epox. Soja-Öl | 2,0 | 2,0 | 2,0 | 2,0 | 2,0 | 2,0 | 2,0 | 2,0 | 2,0 | 2,0 | 2,0 | 2,0 |
| Rhodiastab 50[11)] | 0,2 | 0,2 | 0,2 | 0,2 | 0,2 | 0,2 | 0,2 | 0,2 | 0,2 | 0,2 | 0,2 | 0,2 |
| Chimassorb 944[14)] | / | / | / | 0,15 | 0,15 | 0,15 | / | / | / | / | / | / |
| Malbit CR (Maltit) | / | / | / | / | / | / | 0,5 | 0,5 | 0,5 | / | / | / |
| Dipentaerythrit | / | / | / | / | / | / | / | / | / | 0,5 | 0,5 | 0,5 |
| Stabilisator 1[5)] | 1,0 | / | / | 1,0 | / | / | 1,0 | / | / | 1,0 | / | / |
| Stabilisator 2[9)] | / | 1,0 | / | / | 1,0 | / | / | 1,0 | / | / | 1,0 | / |
| Stabilisator 3[19)] | / | / | 1,0 | / | / | 1,0 | / | / | 1,0 | / | / | 1,0 |

Tabelle IV: (fortgesetzt)

| Statischer Hitzefest bei 190°C (5 min. bei 170°C gewalzt) | | | | | | | | | | | | |
|---|---|---|---|---|---|---|---|---|---|---|---|---|
| Mischung | IV1 | IV2 | IV3 | IV4 | IV5 | IV6 | IV7 | IV8 | IV9 | IV10 | IV11 | IV12 |
| | YI | YI | YI | YI | YI | YI | YI | YI | YI | YI | YI | YI |
| Minuten | | | | | | | | | | | | |
| 10 | 6,0 | 6.6 | 10.3 | 6.6 | 5.8 | 9.0 | 5.8 | 6.2 | 8.1 | 5.4 | 5,8 | 10.0 |
| 15 | 10.1 | 12.7 | 18.7 | 7.8 | 7.7 | 11.1 | 7.3 | 7.2 | 10.4 | 6,7 | 9.9 | 11.2 |
| 20 | 24.2 | 29.5 | 47.9 | 13.8 | 10.6 | 15.4 | 8,9 | 9.4 | 11.1 | 11.7 | 20.1 | 15.7 |
| 25 | 59,9 | >70 | >60 | 29.1 | 32.1 | 24.8 | 11.1 | 19.5 | 16.1 | 21.9 | 48.0 | 25.2 |
| [14)]sterisch gehindertes Amin der Fa.CIBA-GEIGY AG (HALS) | | | | | | | | | | | | |

Es zeigt sich, daß die erfindungsgemäßen Stabilisatorkombinationen (IV4 bis IV12) eine verbesserte Stabilisatorwirkung ergeben.

Tabelle V

| Statischer Hitzetest bei 190°C ( 5 min. bei 170°C gewalzt) | | | | | | | | | |
|---|---|---|---|---|---|---|---|---|---|
| Mischung | V1 | V2 | V3 | V4 | V5 | V6 | V7 | V8 | V9 |
| Evipol SH 6030 (PVC K-Wert 60) | 100 | 100 | 100 | 100 | 100 | 100 | 100 | 100 | 100 |
| CH 300[3)] | 0,8 | 0,8 | 0,8 | 0,8 | 0,8 | 0,8 | 0,8 | 0,8 | 0,8 |
| Wachs E[6)] | 0,4 | 0,4 | 0,4 | 0,4 | 0,4 | 0,4 | 0,4 | 0,4 | 0,4 |
| epox. Soja-Öl | 2,0 | 2,0 | 2,0 | 2,0 | 2,0 | 2,0 | 2,0 | 2,0 | 2,0 |
| Rhodiastab 50[11)] | 0,2 | 0,2 | 0,2 | 0,2 | 0,2 | 0,2 | 0,2 | 0,2 | 0,2 |
| Ca-Stearat | 0,3 | 0,3 | 0,3 | 0,3 | 0,3 | 0,3 | 0,3 | 0,3 | 0,3 |
| Zn-Stearat | 0,5 | 0,5 | 0,5 | 0,5 | 0,5 | 0,5 | 0,5 | 0,5 | 0,5 |
| Wessalith P[15)] | / | / | / | 1,0 | 1,0 | 1,0 | / | / | / |
| Zeolith P[16)] | / | / | / | / | / | / | 1,0 | 1,0 | 1,0 |
| Stabilisator 1[5)] | 1,0 | / | / | 1,0 | / | / | 1.0 | / | / |
| Stabilisator 2[9)] | / | 1,0 | / | / | 1,0 | / | / | 1,0 | / |
| Stabilisator 3[10)] | / | / | 1,0 | / | / | 1,0 | / | / | 1,0 |
| | YI | YI | YI | YI | YI | YI | YI | YI | YI |
| Minuten | | | | | | | | | |
| 20 | 10,3 | 12.3 | 15.4 | 8.8 | 10.6 | 14,2 | 9.3 | 9.4 | 15.7 |
| 25 | 19.6 | 34.7 | 28.6 | 12,4 | 16,8 | 19,5 | 13.3 | 15.3 | 22.6 |
| 30 | 41.1 | 29.5 | 58.8 | 21.0 | 32,5 | 30.5 | 25.0 | 29.2 | 34,8 |
| [15)]Na-Zeolith A der Fa.DEGUSSA [16)]Na-Zeolith P der Fa.DEGUSSA | | | | | | | | | |

Es zeigt sich, daß die Stabilisatorkombination mit Hydrotalcit und Zeolithen ein besseres Ergebnis zeigt.

Tabelle VI: Statischer Hitzetest bei 190°C (5 Minuten bei 170°C gewalzt)

| Mischung | VI1 | VI2 | VI3 | VI4 |
|---|---|---|---|---|
| Evipol EH 6030 | | | | |
| (PVC K-Wert 60) | 100 | 100 | 100 | 100 |
| Wachs E[6)] | 0,4 | 0,4 | 0,4 | 0,4 |
| CH 300[3)] | 0,8 | 0,8 | 0,8 | 0,8 |
| epox. Sojaöl | 5,0 | 5,0 | 5,0 | 5,0 |
| Ca-Stearat | 0,55 | 0,55 | 0,55 | 0,55 |
| Zn-Stearat | 0,25 | 0,25 | 0,25 | 0,25 |
| Rhodiastab 50[11)] | / | / | 0,3 | 0,3 |
| D-26-155[17)] | / | / | / | 0,3 |
| Stabilisator 1[5)] | / | 1,0 | / | / |
| Stabilisator 2[9)] | 1,0 | / | 1,0 | 1,0 |
| | YI | YI | YI | YI |
| Minuten | | | | |
| 20 | 18.5 | 9.7 | 11.4 | 15.6 |
| 25 | 36.5 | 18.8 | 21.9 | 28.3 |
| 30 | 103 | 33.3 | 46.0 | 59.2 |

[17)]β-Ketoester der Formel

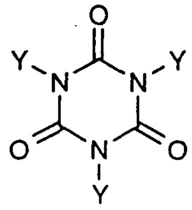

Y = (CH2)2-O-CO-CH2-CO-CH3

Es ist ersichtlich, daß Kombinationen mit β-Diketon oder β-Ketoester gute Effekte zeigen.

Tabelle VII

| Statischer Hitzetest bei 190°C (5 min bei 170°C gewalzt) | | | | | | | | |
|---|---|---|---|---|---|---|---|---|
| Mischung | VII1 | VII2 | VII3 | VII4 | VII5 | VII6 | VII7 | VII8 |
| Evipol SH 6030 (PVC K-Wert 60) | 100 | 100 | 100 | 100 | 100 | 100 | 100 | 100 |
| CH 300[3)] | 0,8 | 0,8 | 0,8 | 0,8 | 0,8 | 0,8 | 0,8 | 0,8 |
| Wachs E[6)] | 0,4 | 0,4 | 0,4 | 0,4 | 0,4 | 0,4 | 0,4 | 0,4 |
| epox. Soja-Öl | 5,0 | 5,0 | 5,0 | 5,0 | 5,0 | 5,0 | 5,0 | 5,0 |
| Ca-Stearat | 0,55 | 0,55 | 0,55 | 0,55 | 0,55 | 0,55 | 0,55 | 0,55 |
| Zn-Stearat | 0,25 | 0,25 | 0,25 | 0,25 | 0,25 | 0,25 | 0,25 | 0,25 |
| Synesal M[18)] | / | / | / | 0,2 | 0,2 | / | / | / |
| Stavinor D 507[19)] | / | / | / | / | / | 0,2 | 0,2 | 0,2 |
| Stabilisator 1[5)] | 1,0 | / | / | 1,0 | / | 1,0 | / | / |
| Stabilisator 2[9)] | / | 1,0 | / | / | 1,0 | / | 1,0 | / |
| Stabilisator 3[10)] | / | / | 1,0 | / | / | / | / | / |
| Minuten | YI | YI | YI | YI | YI | YI | YI | YI |
| 0 | 5,4 | 4,8 | 6,3 | 2,9 | 3,9 | 2,3 | 2,9 | 4,4 |
| 5 | 6,4 | 4,7 | 6,7 | 3,5 | 4,1 | 2,3 | 3,7 | 4,9 |
| 10 | 6,7 | 5,5 | 7,0 | 4,4 | 5,3 | 3,5 | 4,5 | 6,7 |
| 15 | 7,3 | 7,6 | 8,3 | 5,4 | 7,5 | 5,4 | 6,3 | 8,2 |
| 20 | 10,8 | 12,3 | 12,5 | 8,9 | 13,9 | 9,3 | 11,3 | 11,9 |
| 25 | 19,9 | 28,5 | 22,9 | 18,0 | 27,2 | 17,5 | 23,8 | 21,3 |
| 30 | 33,7 | 65,8 | 45,1 | 31,8 | 64,2 | 32,3 | 62,6 | 38,4 |
| [18)]Thiodiethylen-bis-(5-methoxy-carbonyl-2,6-dimethyl-1,4-dihydro-pyridin-3-carboxylat ex Fa. LAGOR [19)]3-Bis-dodecyloxycarbonyl-2,6-dimethyl-1,4-dihydropyridin ex Fa.ATOCHEM | | | | | | | | |

Der Versuch zeigt, daß die Stabilisatorkombinationen mit Dihydropyridinen (VII4 bis VII8) in Anfangsfarbe und Farbhaltung (Mittelfarbe) verbessert sind.

**Patentansprüche**

1. Stabilisatorkombination enthaltend

A) mindestens eine Verbindung der Formel I

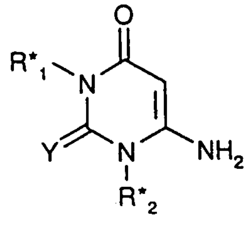

(I)

worin $R^*_1$ und $R^*_2$ unabhängig voneinander für $C_1$-$C_{12}$-Alkyl, $C_3$-$C_6$-Alkenyl, unsubstituiertes oder mit 1 bis 3 $C_1$-$C_4$-Alkyl-, $C_1$-$C_4$-Alkoxy-, $C_5$-$C_8$-Cycloalkyl- oder mit Hydroxygruppen oder Cl-Atomen substituiertes $C_5$-$C_8$-Cycloalkyl, unsubstituiertes oder am Phenylring mit 1 bis 3 $C_1$-$C_4$-Alkyl-, $C_1$-$C_4$-Alkoxy-, $C_5$-$C_8$-Cycloalkyl- oder mit Hydroxygruppen oder Cl-Atomen substituiertes $C_7$-$C_9$-Phenylalkyl darstellen, und $R^*_1$ oder $R^*_2$ zusätzlich für Wasserstoff und $C_1$-$C_{12}$-Alkyl stehen können, sowie
Y S oder O ist, und
B) mindestens eine Verbindung aus der Gruppe der Organozinnstabilisatoren.

**2.** Stabilisatorkombination gemäß Anspruch 1, worin $R^*_1$ und $R^*_2$ unabhängig voneinander für H und/oder $C_1$-$C_4$-Alkyl stehen.

**3.** Stabilisatorkombination gemäß Anspruch 1, worin die Verbindung der Komponente A) 6-Amino-1,3-dimethyl-uracil, 6-Amino-1,3-di-n-propyl-uracil, 6-Amino-1,3-di-nbutyl-uracil, 6-Amino-1,3-di-ethyl-thiouracil oder 6-Amino-1,3-di-n-butyl-thiouracil ist.

**4.** Stabilisatorkombination gemäß Anspruch 1 bis 3, die zusätzlich mindestens einen epoxidierten Fettsäureester enthält.

**5.** Stabilisatorkombination gemäß Anspruch 1 bis 4, die zusätzlich Zink-und/oder Alkali- und/oder Erdalkalicarboxylate oder Aluminiumcarboxylate enthält.

**6.** Stabilisatorkombination gemäß Anspruch 1 bis 5, die zusätzlich mindestens einen weiteren Stoff aus den Gruppen der Phosphite, Antioxidantien, beta-Dicarbonylverbindungen, Weichmacher, Füllstoffe, Gleitmittel oder Pigmente enthält.

**7.** Stabilisatorkombination gemäß Anspruch 6, worin der Füllstoff Kreide ist.

**8.** Stabilisatorkombination gemäß Anspruch 6, worin das Gleitmittel Calciumstearat ist.

**9.** Stabilisatorkombination gemäß Anspruch 6, worin als Pigment Titandioxid verwendet wird.

**10.** Zusammensetzung enthaltend ein chlorhaltiges Polymer und die Stabilisatorkombination gemäß Anspruch 1 bis 9.

**11.** Zusammensetzung gemäß Anspruch 10, **dadurch gekennzeichnet, dass** als chlorhaltiges Polymer PVC verwendet wird.

**12.** Verfahren zur Stabilisierung chlorhaltiger Polymere, **dadurch gekennzeichnet, dass** in die chlorhaltigen Polymere eine Stabilisatorkombination gemäß Anspruch 1 bis 9 eingearbeitet wird.

Europäisches Patentamt

# EUROPÄISCHER RECHERCHENBERICHT

Nummer der Anmeldung
EP 03 00 3579

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | EP 0 065 934 A (CIBA)<br>1. Dezember 1982 (1982-12-01)<br>* Ansprüche 1,6 *<br>* Seite 7, Absatz 1; Beispiele *<br>--- | 1,3,<br>10-12 | C08K5/3462<br>C08L57/08<br>C08L27/06 |
| X | US 4 656 209 A (WEHNER ET AL.)<br>7. April 1987 (1987-04-07)<br>* Ansprüche 1,4,8 *<br>--- | 1,3,<br>10-12 | |
| X | EP 0 354 179 A (CIBA)<br>7. Februar 1990 (1990-02-07)<br>* Seite 4, Zeile 36 - Zeile 37; Ansprüche 1,11 *<br>--- | 1,10-12 | |
| X,D | EP 0 041 479 A (CIBA GEIGY AG)<br>9. Dezember 1981 (1981-12-09)<br>* Seite 5, Absatz 3; Ansprüche 1,5,7 *<br>----- | 1,3,5,<br>10-12 | |
| | | | RECHERCHIERTE SACHGEBIETE (Int.Cl.7) |
| | | | C08K |

Der vorliegende Recherchenbericht wurde für alle Patentansprüche erstellt

| Recherchenort | Abschlußdatum der Recherche | Prüfer |
|---|---|---|
| MÜNCHEN | 22. Mai 2003 | Engel, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 03 00 3579

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 65934 | A | 01-12-1982 | CA | 1180476 A1 | 01-01-1985 |
| | | | DE | 3265213 D1 | 12-09-1985 |
| | | | EP | 0065934 A1 | 01-12-1982 |
| | | | JP | 57200436 A | 08-12-1982 |
| US 4656209 | A | 07-04-1987 | KEINE | | |
| EP 354179 | A | 07-02-1990 | CA | 1336600 A1 | 08-08-1995 |
| | | | DE | 58908208 D1 | 22-09-1994 |
| | | | EP | 0354179 A1 | 07-02-1990 |
| | | | JP | 2088655 A | 28-03-1990 |
| EP 0041479 | A | 09-12-1981 | CA | 1154898 A1 | 04-10-1983 |
| | | | DE | 3162945 D1 | 10-05-1984 |
| | | | EP | 0041479 A1 | 09-12-1981 |
| | | | JP | 1011066 B | 23-02-1989 |
| | | | JP | 1528167 C | 30-10-1989 |
| | | | JP | 57023647 A | 06-02-1982 |
| | | | US | 4352903 A | 05-10-1982 |

EPO FORM P0461

Für nähere Einzelheiten zu diesem Anhang : siehe Amtsblatt des Europäischen Patentamts, Nr.12/82